(19) Europäisches Patentamt
European Patent Office
Office européen des brevets

(11) **EP 4 738 749 A1**

(12) **EUROPEAN PATENT APPLICATION**
published in accordance with Art. 153(4) EPC

(43) Date of publication:
06.05.2026 Bulletin 2026/19

(21) Application number: 24830668.0

(22) Date of filing: 24.06.2024

(51) International Patent Classification (IPC):
*H04L 5/00* (2006.01)

(52) Cooperative Patent Classification (CPC):
H04L 5/00; H04W 72/0446; H04W 72/231;
H04W 72/232

(86) International application number:
PCT/CN2024/100843

(87) International publication number:
WO 2025/002023 (02.01.2025 Gazette 2025/01)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 30.06.2023 CN 202310798122

(71) Applicant: Apogee Networks, LLC
Plano, TX 75024 (US)

(72) Inventors:
• HU, Yang
Shanghai 201206 (CN)
• ZHANG, Xiaobo
Shanghai 201206 (CN)

(74) Representative: Gunzelmann, Rainer
Wuesthoff & Wuesthoff
Patentanwälte und Rechtsanwalt PartG mbB
Schweigerstraße 2
81541 München (DE)

(54) **METHOD AND APPARATUS USED IN NODE FOR WIRELESS COMMUNICATION**

(57) Disclosed in the present application are a method and apparatus used in a node for wireless communication. The method comprises: a first receiver receiving first RRC signaling and a first information block, wherein at least one symbol is indicated by the first RRC signaling as a downlink symbol; the first receiver receiving first signaling; and a first transmitter at least sending a first signal on a first PUCCH, wherein a first symbol set comprises symbols that are occupied by the first signal in time domain; the minimum PRB index of the first signal depends on the first signaling, and whether the first symbol set comprises a first-type symbol; and whether the at least one symbol, which is indicated by the first RRC signaling as the downlink symbol, is the first-type symbol depends on the first information block.

FIG. 1

## Description

### Technical Field

The present application relates to a transmission method and apparatus in a wireless communication system, in particular to a transmission method and apparatus for wireless signals in a wireless communication system supporting a cellular network.

### Background Art

Reporting UCI (Uplink control information) on a PUCCH (Physical uplink control channel) according to a configuration or dynamic indication of a base station is a key technology in wireless communication.

### Summary of the Invention

How to determine a PRB (Physical resource block) occupied by PUCCH transmission according to a symbol type of symbols used for the PUCCH transmission in a time domain under the condition that different symbol types are configured is a key problem to be considered in optimizing resource allocation. The present application discloses a solution for the above problem. The present application can be applicable to various wireless communication scenarios, such as a scenario supporting full-duplex communication, a scenario supporting only half-duplex communication, eMBB (Enhanced Mobile Broadband), URLLC (Ultra-Reliable Low-Latency Communication), Internet of Vehicles, Internet of Things, NTN (Non-Terrestrial Networks), etc., and achieve similar technical effects. In addition, the use of a unified solution for different scenarios (including but being not limited to the scenario supporting full-duplex communication, the scenario supporting only half-duplex communication, eMBB, URLLC, Internet of Vehicles, Internet of Things, NTN) also facilitates the reduction of hardware complexity and costs, or improves performance. In the absence of conflicts, embodiments and features in the embodiments in any node of the present application can be applied to any other nodes. In the absence of conflicts, the embodiments and features in the embodiments of the present application may be arbitrarily combined with each other.

As one embodiment, the interpretation of the terminologies in the present application refers to the definition of the TS38 series of the specification protocol of 3GPP.

As one embodiment, the interpretation of the terminologies in the present application refers to the definition of the TS37 series of the specification protocol of 3GPP.

The present application discloses a method used in a first node for wireless communication, characterized by comprising:

receiving first RRC signaling and a first information block, wherein at least one symbol is indicated by the first RRC signaling as a downlink symbol;
receiving first signaling; and
transmitting at least a first signal on a first PUCCH, wherein a first symbol set comprises symbols occupied by the first signal in a time domain;
wherein a minimum PRB index of the first signal depends on the first signaling as well as whether the first symbol set comprises a first-type symbol, and whether at least one symbol indicated by the first RRC signaling as a downlink symbol is the first-type symbol depends on the first information block.

As one embodiment, a problem to be solved by the present application comprises: how to determine a minimum PRB index of the first signal under the condition that the at least one symbol indicated by the first RRC signaling as the downlink symbol is the first-type symbol depends on the first information block.

As one embodiment, a problem to be solved by the present application comprises: how to enhance the configuration of resources for PUCCH transmission.

As one embodiment, a problem to be solved by the present application comprises: how to determine a PRB with the smallest index occupied in the frequency domain by a signal transmitted on the PUCCH according to a symbol type.

As one embodiment, a benefit of the above method comprises: improving adaptability between the resource occupied by PUCCH transmission and the symbol type, and optimizing system resource allocation.

As one embodiment, a benefit of the above method comprises: improving the utilization efficiency of system resources under the condition that the at least one symbol indicated by the first RRC signaling as the downlink symbol is the first-type symbol depends on the first information block.

As one embodiment, a benefit of the above method comprises: improving scheduling flexibility of the PUCCH.

As one embodiment, a benefit of the above method comprises: improving the uplink transmission performance for a scenario where the first-type symbol is configured.

As one embodiment, a benefit of the above method comprises: good compatibility with existing 3GPP technical specification versions.

According to one aspect of the present application, the above method is characterized in that, whether a first parameter is used for determining the minimum PRB index of the first signal depends on whether the first symbol set comprises the first-type symbol; when the first symbol set comprises at least one first-type symbol, the first parameter is used for determining the minimum PRB index of the first signal; and the first parameter is configurable.

According to one aspect of the present application, the above method is characterized in that, the signal transmission on the first PUCCH adopts frequency hopping, and the first signal is in a first hop; and when the first symbol set comprises at least one first-type symbol, the minimum PRB index of the first signal is determined to be a result of a linear combination of a plurality of values, wherein the plurality of values comprise a first value and a second value, the first value depends on the first parameter, and the second value depends on an index of a first CCE of a PDCCH used for receiving the first signaling.

As one embodiment, a benefit of the above method comprises: improving adaptability between the resources occupied by the PUCCH transmission when dedicated PUCCH resources are not configured and the symbol type.

According to one aspect of the present application, the above method is characterized in that, the index of the first CCE of the PDCCH used for receiving the first signaling and a PUCCH resource indicator field in the first signaling are both used for determining PUCCH resources for signal transmission on the first PUCCH.

As one embodiment, a benefit of the above method comprises: reducing the bit overhead in the first signaling.

According to one aspect of the present application, the above method is characterized in that, a symbol configured by the first information block as available for uplink transmission and indicated by the first RRC signaling as a downlink symbol belongs to the first-type symbol.

As one embodiment, a benefit of the above method comprises: improving the uplink scheduling flexibility by using the symbol indicated by the first RRC signaling as the downlink symbol but available for uplink transmission to transmit the first signal (or other transmission signals on the uplink).

According to one aspect of the present application, the above method is characterized in that, the first RRC signaling is tdd-UL-DL-ConfigurationCommon.

According to one aspect of the present application, the above method is characterized in that, the number of PRBs occupied by the first signal depends on whether the first symbol set comprises the first-type symbol.

As one embodiment, a benefit of the above method comprises: realizing a good trade-off between PUCCH transmission performance and PUCCH resource overhead.

The present application discloses a method used in a second node for wireless communication, characterized by comprising:

transmitting first RRC signaling and a first information block, wherein at least one symbol is indicated by the first RRC signaling as a downlink symbol;
transmitting first signaling; and
receiving at least a first signal on a first PUCCH, wherein a first symbol set comprises symbols occupied by the first signal in a time domain,
wherein a minimum PRB index of the first signal depends on the first signaling as well as whether the first symbol set comprises a first-type symbol, and whether at least one symbol indicated by the first RRC signaling as a downlink symbol is the first-type symbol depends on the first information block.

According to one aspect of the present application, the above method is characterized in that, whether a first parameter is used for determining the minimum PRB index of the first signal depends on whether the first symbol set comprises the first-type symbol; when the first symbol set comprises at least one first-type symbol, the first parameter is used for determining the minimum PRB index of the first signal; and the first parameter is configurable.

According to one aspect of the present application, the above method is characterized in that, the signal transmission on the first PUCCH adopts frequency hopping, and the first signal is in a first hop; and when the first symbol set comprises at least one first-type symbol, the minimum PRB index of the first signal is determined to be a result of a linear combination of a plurality of values, wherein the plurality of values comprise a first value and a second value, the first value depends on the first parameter, and the second value depends on an index of a first CCE of a PDCCH used for receiving the first signaling.

According to one aspect of the present application, the above method is characterized in that, the index of the first CCE of the PDCCH used for receiving the first signaling and a PUCCH resource indicator field in the first signaling are both used for determining PUCCH resources for signal transmission on the first PUCCH.

According to one aspect of the present application, the above method is characterized in that, a symbol configured by the first information block as available for uplink transmission and indicated by the first RRC signaling as a downlink symbol belongs to the first-type symbol.

According to one aspect of the present application, the above method is characterized in that, the first RRC signaling is tdd-UL-DL-ConfigurationCommon.

According to one aspect of the present application, the above method is characterized in that, the number of PRBs occupied by the first signal depends on whether the first symbol set comprises the first-type symbol.

The present application discloses a first node for wireless communication, characterized by comprising:

a first receiver receiving first RRC signaling and a first information block, wherein at least one symbol is indicated by the first RRC signaling as a downlink symbol;
the first receiver receiving first signaling; and
a first transmitter transmitting at least a first signal on a first PUCCH, wherein a first symbol set comprises symbols occupied by the first signal in a time domain,
wherein a minimum PRB index of the first signal depends on the first signaling as well as whether the first symbol set comprises a first-type symbol, and whether at least one symbol indicated by the first RRC signaling as a downlink symbol is the first-type symbol depends on the first information block.

The present application discloses a second node for wireless communication, characterized by comprising:

a second transmitter transmitting first RRC signaling and a first information block, wherein at least one symbol is indicated by the first RRC signaling as a downlink symbol;
the second transmitter transmitting first signaling; and
a second receiver receiving at least a first signal on a first PUCCH, wherein a first symbol set comprises symbols occupied by the first signal in a time domain,
wherein a minimum PRB index of the first signal depends on the first signaling as well as whether the first symbol set comprises a first-type symbol, and whether at least one symbol indicated by the first RRC signaling as a downlink symbol is the first-type symbol depends on the first information block.

## Brief Description of the Drawings

Other features, purposes and advantages of the present application will become more apparent by reading the detailed description of the non-limiting embodiments in the following drawings with reference to the following drawings:

FIG. 1 shows a processing flow chart of a first node according to one embodiment of the present application;
FIG. 2 shows a schematic diagram of a network architecture according to one embodiment of the present application;
FIG. 3 shows a schematic diagram of a wireless protocol architecture of a user plane and a control plane according to one embodiment of the present application;
FIG. 4 shows a schematic diagram of a first communication device and a second communication device according to one embodiment of the present application;
FIG. 5 shows a signal transmission flow chart according to one embodiment of the present application;
FIG. 6 shows a schematic diagram of a relationship between a symbol indicated by first RRC signaling as a downlink symbol and a first-type symbol according to one embodiment of the present application;
FIG. 7 shows an illustration schematic diagram of signal transmission on a first PUCCH according to one embodiment of the present application;
FIG. 8 shows an illustration schematic diagram of signal transmission on a first PUCCH according to one embodiment of the present application;
FIG. 9 shows an illustration schematic diagram of whether a minimum PRB index of a first signal depends on whether a first symbol set comprises a first-type symbol according to one embodiment of the present application;
FIG. 10 shows a schematic diagram of relationships among first signaling, a first PUCCH resource, and a first PUCCH according to one embodiment of the present application;
FIG. 11 shows a structural block diagram of a processing device in a first node device according to one embodiment of the present application; and
FIG. 12 shows a structural block diagram of a processing device in a second node device according to one embodiment of the present application.

## Detailed Description of Embodiments

The technical solution of the present application will be further described in detail below in conjunction with the accompanying drawings. It should be noted that, in the absence of conflicts, the embodiments and features in the embodiments of the present application can be arbitrarily combined with each other.

## Embodiment 1

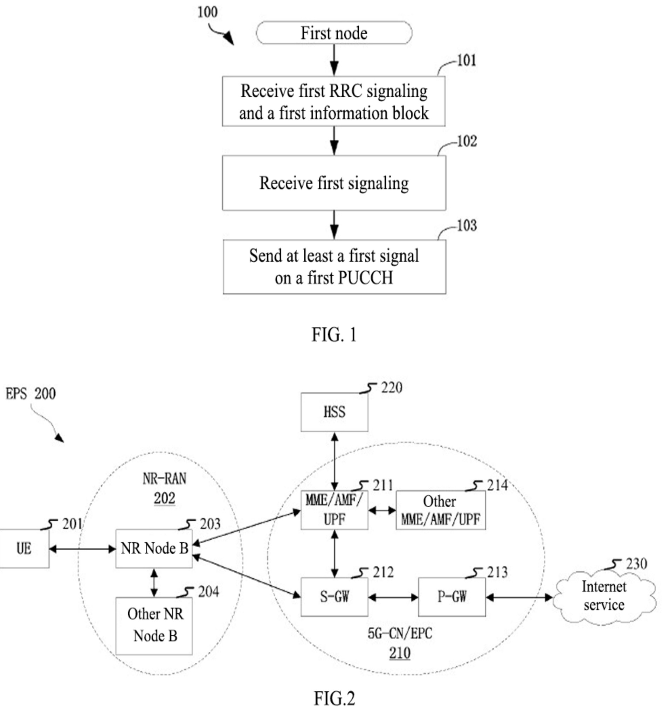

Embodiment 1 illustrates a processing flow chart of a first node according to one embodiment of the present application, as shown in FIG. 1.

In Embodiment 1, the first node in the present application receives first RRC signaling and a first information block in step 101; receives first signaling in step 102; and transmits at least a first signal on a first PUCCH in step 103.

In Embodiment 1, at least one symbol is indicated by the first RRC signaling as a downlink symbol; a first symbol set comprises symbols occupied by the first signal in a time domain; and a minimum PRB index of the first signal depends on the first signaling as well as whether the first symbol set comprises a first-type symbol, and whether at least one symbol indicated by the first RRC signaling as a downlink symbol is the first-type symbol depends on the first information block.

As one embodiment, the first RRC signaling comprises at least one field in at least one IE (Information Element).

As one embodiment, the first RRC signaling comprises an RRC message.

As one embodiment, the first RRC signaling is one IE.

As one embodiment, the first RRC signaling is one field in one IE.

As one embodiment, the first RRC signaling is one RRC IE.

As one embodiment, the first RRC signaling comprises one RRC parameter.

As one embodiment, the first RRC signaling comprises time domain configuration information.

As one embodiment, the first RRC signaling comprises TDD (Time Division Duplexing) configuration information of an UL/DL (Uplink/Downlink).

As one embodiment, the first RRC signaling comprises tdd-UL-DL-ConfigurationCommon.

As one embodiment, the first RRC signaling is tdd-UL-DL-ConfigurationCommon.

As one embodiment, tdd-UL-DL-ConfigurationCommon is comprised in the name of the first RRC signaling.

As one embodiment, the first RRC signaling comprises tdd-UL-DL-ConfigurationCommon.

As one embodiment, the first RRC signaling is tdd-UL-DL-ConfigurationCommon.

As one embodiment, a benefit of the above method comprises: optimizing the configuration of PUCCH resources under the condition that tdd-UL-DL-ConfigurationCommon is configured.

As one embodiment, a benefit of the above method comprises: optimizing the configuration of PUCCH resources under the condition that tdd-UL-DL-ConfigurationCommon is configured but tdd-UL-DL-ConfigurationDedicated is not configured.

As one embodiment, the first RRC signaling is tdd-UL-DL-ConfigurationDedicated.

As one embodiment, tdd-UL-DL-ConfigurationDedicated is comprised in the name of the first RRC signaling.

As one embodiment, the first RRC signaling comprises tdd-UL-DL-ConfigurationDedicated.

As one embodiment, the first RRC signaling comprises tdd-UL-DL-ConfigurationCommon and tdd-UL-DL-ConfigurationDedicated.

As one embodiment, a benefit of the above method comprises: optimizing the configuration of PUCCH resources under the condition that at least tdd-UL-DL-ConfigurationDedicated is configured.

As one embodiment, the first information block comprises physical layer signaling.

As one embodiment, the first information block comprises DCI (Downlink Control Information).

As one embodiment, the first information block comprises at least one field in one DCI format.

As one embodiment, the first information block is DCI.

As one embodiment, the first information block is one field in one DCI format.

As one embodiment, a benefit of the above method comprises: improving the transmission timeliness of information comprised in the first information block.

As one embodiment, the first information block comprises higher layer signaling.

As one embodiment, the first information block comprises a MAC CE (Medium Access Control Layer Control Element).

As one embodiment, the first information block comprises RRC (Radio Resource Control) signaling.

As one embodiment, the first information block comprises an RRC message.

As one embodiment, the first information block comprises at least one field in at least one IE (Information Element).

As one embodiment, the first information block is one MAC CE.

As one embodiment, the first information block is one field in one MAC CE.

As one embodiment, the first information block is one RRC IE.

As one embodiment, the first information block is one field in one IE.

As one embodiment, the first information block is RRC signaling.

As one embodiment, a benefit of the above method comprises: improving the transmission reliability of information comprised in the first information block.

As one embodiment, the first information block comprises information in an SIB (System Information Block).

As one embodiment, the first information block comprises information in an SIB other than an SIB1.

As one embodiment, the first information block comprises information in an SIB1.

As one embodiment, a benefit of the above method comprises: improving adaptability between the resource occupied by the PUCCH transmission in the scenario prior to the RRC connection being established and the symbol type.

As one embodiment, the first node is not configured with a dedicated PUCCH resource.

As one embodiment, a benefit of the above method comprises: improving adaptability between the resources occupied by the PUCCH transmission when dedicated PUCCH resources are not configured and the symbol type.

As one embodiment, subband is comprised in the name of the first information block.

As one embodiment, SBFD is comprised in the name of the first information block.

As one embodiment, the first information block comprises configuration information for at least one frequency band resource.

As one embodiment, the first information block comprises configuration information of a time domain resource.

As one embodiment, the first information block comprises configuration information of a symbol type.

As one embodiment, the first information block comprises configuration information of resources for a full-duplex operation.

As one embodiment, the first information block comprises configuration information of resources in a full-duplex mode.

As one embodiment, the first information block does not comprise tdd-UL-DL-ConfigurationCommon.

As one embodiment, the first information block is RRC signaling other than the first RRC signaling.

As one embodiment, the first RRC signaling is received before the first information block.

As one embodiment, the first RRC signaling is received after the first information block.

As one embodiment, the first RRC signaling and the first information block are received simultaneously.

As one embodiment, at least one symbol is indicated by the first RRC signaling as an uplink symbol.

As one embodiment, one symbol may be indicated by the first RRC signaling as an uplink symbol, a downlink symbol, or a flexible symbol.

As one embodiment, the first signaling is used for scheduling a first PDSCH (Physical downlink shared channel), and the first signal is used for transmitting HARQ-ACK (Hybrid automatic repeat request acknowledgement) information for the first PDSCH.

As one embodiment, the first PDSCH carries one UE contention resolution identity. In response to reception of the first PDSCH, the first node performs transmission in the first PUCCH.

As one embodiment, a DL-SCH (Downlink shared channel) mapped to the first PDSCH comprises the one UE contention resolution identity.

As one embodiment, at least one transport block is transmitted in the first PDSCH, and the HARQ-ACK information for the first PDSCH is used for indicating whether the at least one transport block is correctly decoded.

As one embodiment, the first signaling is physical layer signaling.

As one embodiment, the first signaling is DCI.

As one embodiment, the first signaling comprises at least one field in one DCI format.

As one embodiment, the first signaling is one of a DCI format 1_1, or a DCI format 1_2, or a DCI format 1_3.

As one embodiment, a benefit of the above method comprises: small scheduling delay.

As one embodiment, the first signaling is a DCI format 1_0.

As one embodiment, the first signaling is a DCI 1_0 with CRC scrambled by a TC-RNTI.

As one embodiment, a benefit of the above method comprises: improving adaptability between a PUCCH resource used in a random access process and a symbol type.

As one embodiment, the first signaling comprises control information.

As one embodiment, the first signaling comprises RRC signaling.

As one embodiment, the first signaling is signaling used for triggering signal transmission on the first PUCCH.

As one embodiment, the first symbol set depends on the first signaling.

As one embodiment, the first signaling is used for determining the first symbol set.

As one embodiment, the first signaling is used for performing calculations to obtain the first symbol set.

As one embodiment, the first signaling explicitly indicates the first symbol set.

As one embodiment, the first signaling implicitly indicates the first symbol set.

As one embodiment, one field in the first signaling indicates the first symbol set.

As one embodiment, the first symbol set comprises continuous symbols. The first signaling is used for indicating a starting symbol in the first symbol set and the number of symbols comprised in the first symbol set.

As one embodiment, the first symbol set comprises at least one symbol in one slot, and the first signaling is used for indicating the one slot.

As one embodiment, the first symbol set comprises at least one symbol in one slot, and a PDSCH-to-HARQ feedback timing indicator field in the first signaling indicates the one slot.

As one embodiment, the first symbol set comprises at least one symbol in a UL (Uplink) slot with an index of n1 + k, the n1 is an index of a last UL slot that overlaps with a DL (Downlink) slot n2 for PUCCH transmission, a PDSCH scheduled by the first signaling ends at the DL slot n2, and a PDSCH-to-HARQ feedback timing indicator field in the first signaling indicates the k.

As one embodiment, all symbols in the first symbol set are in the same slot.

As one embodiment, any symbol in the first symbol set is a symbol occupied by signal transmission on the first PUCCH.

As one embodiment, the first symbol set comprising at least one symbol in one slot means: the first symbol set is the one slot.

As one embodiment, the first symbol set is a slot in which the first PUCCH is located.

As one embodiment, the meaning of the expression of "the first symbol set depends on the first signaling" is: a first PUCCH resource is used for signal transmission on the first PUCCH, the first PUCCH resource depends on the first signaling, and the PUCCH resource occupies the first symbol set in the time domain.

As one embodiment, the first symbol set comprises and only comprises all symbols occupied by signal transmission on the first PUCCH in the time domain.

As one embodiment, the first symbol set is: symbol(s) occupied by signal transmission on the first PUCCH in the time domain.

As one embodiment, from the perspective of the time domain, which symbol(s) the signal transmission on the first PUCCH occupies/occupy in a slot are indicated by RRC signaling; and the first signaling is used for indicating the slot in which the signal transmission on the first PUCCH is located.

As one embodiment, from the perspective of the time domain, which symbol(s) the signal transmission on the first PUCCH occupies/occupy in a slot are indicated by RRC signaling; and the PDSCH-to-HARQ feedback timing indicator field in the first signaling indicates the slot in which the signal transmission on the first PUCCH is located.

As one embodiment, from the perspective of the time domain, which symbol(s) the signal transmission on the first PUCCH occupies/occupy in a slot are indicated by RRC signaling; and the slot in which the signal transmission on the first PUCCH is located is a UL (Uplink) slot with an index of n1 + k, the n1 is an index of a last UL slot that overlaps with a DL (Downlink) slot n2 for PUCCH transmission, a PDSCH scheduled by the first signaling ends at the DL slot n2, and a PDSCH-to-HARQ feedback timing indicator field in the first signaling indicates the k.

As one embodiment, the signal transmission on the first PUCCH comprises transmission of the first signal.

As one embodiment, the signal transmission on the first PUCCH occupies, within a slot: symbols comprised in one symbol set indicated by RRC signaling from a plurality of predefined symbol sets; and any one of the plurality of predefined symbol sets comprises at least one symbol within a slot.

As one embodiment, the first signal occupies the first symbol set in the time domain.

As one embodiment, the first symbol set consists of symbol(s) occupied by the first signal in the time domain.

As one embodiment, the first symbol set comprises and only comprises a symbol occupied by the first signal in the time domain.

As one embodiment, the first symbol set consists of a symbol(s) occupied by the first PUCCH in the time domain.

As one embodiment, the signal transmission on the first PUCCH adopts one of PUCCH format 0 or PUCCH format 1.

As one embodiment, the signal transmission on the first PUCCH adopts one of PUCCH format 0 or PUCCH format 1, PUCCH format 2, PUCCH format 3, or PUCCH format 4.

As one embodiment, the first signaling is used for determining a PUCCH resource for signal transmission on the first PUCCH.

As one embodiment, the first PUCCH resource set comprises a plurality of PUCCH resources, the first PUCCH resource set is configured by RRC signaling, a PUCCH indicator (PUCCH resource indicator) field in the first signaling indicates PUCCH resources for signal transmission on the first PUCCH from the first PUCCH resource set.

As one embodiment, a first PUCCH resource set is determined from a plurality of PUCCH resource sets configured by RRC signaling according to a bit quantity of UCI (Uplink control information) to be transmitted on the first PUCCH and in accordance with a predefined or configured mapping relationship between UCI bit quantities and PUCCH resource sets, and a PUCCH indicator field in the first signaling indicates a PUCCH resource for signal transmission on the first PUCCH from the first PUCCH resource set.

As one embodiment, one PUCCH resource set of the plurality of PUCCH resource sets comprises a plurality of PUCCH resources.

As one embodiment, the first symbol set is one slot.

As one embodiment, the first symbol set comprises at least one symbol.

As one embodiment, symbols in the first symbol set are OFDM (Orthogonal Frequency Division Multiplexing) symbols.

As one embodiment, symbols in the first symbol set are symbols available for uplink transmission.

As one embodiment, symbols in the first symbol set are symbols in the same slot.

As one embodiment, the first symbol set does not comprise symbols that are not the first-type symbol and are indicated by the first RRC signaling as downlink symbols.

As one embodiment, the first signal comprises a wireless signal.

As one embodiment, the first signal comprises a signal for transmission of the UCI.

As one embodiment, the first signal comprises a signal for transmission of HARQ-ACK information.

As one embodiment, the first signal comprises a signal for transmission of CSI (Channel state information).

As one embodiment, the first signal comprises a signal for transmission of an SR (Scheduling request).

As one embodiment, the first signal comprises an output after at least sequence generation based on UCI bits, and mapping to physical resources.

As one embodiment, the first signal comprises an output of a UCI bit block after at least sequence modulation and mapping to physical resources.

As one embodiment, the first signal comprises an output after at least sequence generation based on UCI bits and mapping to physical resources, or the first signal comprises an output of a UCI bit block after at least sequence modulation and mapping to physical resources.

As one embodiment, the first signal comprises an output of a UCI bit block after at least scrambling, modulation, and mapping to physical resources; or, the first signal comprises a UCI bit block after at least scrambling, modulation, transform precoding, and the output after mapping to physical resources; or, the first signal comprises the output of a UCI bit block after at least scrambling, modulation, block-wise spreading (Block-wise spreading), transform precoding, and mapping to physical resources.

As one embodiment, from the perspective of the time-frequency domain, the first PUCCH comprises a time-frequency resource occupied by transmission of the first signal.

As one embodiment, the meaning of the expression of "transmitting at least a first signal on a first PUCCH" comprises: transmitting a first signal, wherein the first signal is one PUCCH.

As one embodiment, the meaning of the expression of "transmitting at least a first signal on a first PUCCH" comprises: transmitting a first PUCCH using frequency hopping, wherein the first signal is the transmission of the first PUCCH in a first hop.

As one embodiment, the meaning of the expression of "transmitting at least a first signal on the first PUCCH" comprises: transmitting a first PUCCH using frequency hopping, wherein the first signal is the transmission of the first PUCCH in a second hop.

As one embodiment, the first signal occupies only one PRB (Physical resource block) in the frequency domain.

As one embodiment, a benefit of the above method comprises: reducing the overhead of frequency domain resources.

As one embodiment, the first signal occupies a plurality of PRBs in the frequency domain.

As one embodiment, the first signal occupies a plurality of continuous PRBs in the frequency domain.

As one embodiment, the first signal occupies N continuous PRBs in the frequency domain, and the N is a configurable positive integer.

As one embodiment, the N is not greater than 16.

As one embodiment, the N is configured by RRC signaling.

As one embodiment, the minimum PRB index (lowest PRB index) of the first signal is: a minimum index of PRBs occupied by the first signal in the frequency domain.

As one embodiment, the minimum PRB index of the first signal is: the first PRB occupied by the first signal in the frequency domain.

As one embodiment, the minimum PRB index of the first signal is: an index of a starting PRB occupied by the first signal in the frequency domain.

As one embodiment, the minimum PRB index of the first signal is an index of the first PRB; and the first PRB is one PRB occupied by the first signal in the frequency domain, and an index of any PRB occupied by the first signal in the frequency domain is not less than the minimum PRB index of the first signal.

As one embodiment, when the first signal occupies only one PRB in the frequency domain, the minimum PRB index of the first signal is: an index of the only one PRB occupied by the first signal.

As one embodiment, signal transmission on the first PUCCH adopts frequency hopping, the first signal is in a second hop, and a second signal is in a first hop.

As one embodiment, signal transmission on the first PUCCH adopts frequency hopping, the first signal is in a first hop, and a second signal is in a second hop.

As one embodiment, a benefit of the above method comprises: improving the robustness of signal transmission on the first PUCCH.

As one embodiment, the first signaling is used for scheduling a first PDSCH, and the first signal and a second signal are used together for transmitting HARQ-ACK information for the first PDSCH.

As one embodiment, the signal transmission on the first PUCCH comprises transmission of the first signal and transmission of the second signal.

As one embodiment, the first symbol set comprises a symbol occupied by the first signal in the time domain and a symbol occupied by the second signal in the time domain.

As one embodiment, the number of PRBs occupied by the first PUCCH in the frequency domain is a sum of the number of PRBs occupied by the first signal in the frequency domain and the number of PRBs occupied by the second signal in the frequency domain.

As one embodiment, the first PUCCH occupies $K_0$ symbols in a time domain, the first signal occupies $\lfloor K_0/2 \rfloor$ symbols among the $K_0$ symbols in the time domain, the second signal occupies remaining $K_0 - \lfloor K_0/2 \rfloor$ symbols among the $K_0$ symbols in the time domain, and the $K_0$ is a positive integer greater than 1.

As one embodiment, the first PUCCH occupies $K_0$ symbols in a time domain, the second signal occupies $\lfloor K_0/2 \rfloor$ symbols among the $K_0$ symbols in the time domain, the first signal occupies remaining $K_0 - \lfloor K_0/2 \rfloor$ symbols among the $K_0$ symbols in the time domain, and the $K_0$ is a positive integer greater than 1.

As one embodiment, the first PUCCH occupies $K_0$ symbols in a time domain, the first signal occupies $\lfloor K_0/2 \rfloor$ symbols among the $K_0$ symbols in the time domain, the second signal occupies remaining $K_0 - \lfloor K_0/2 \rfloor$ symbols among the $K_0$ symbols in the time domain, and the $K_0$ is a positive integer greater than 1.

As one embodiment, the first PUCCH occupies $K_0$ symbols in a time domain, the second signal occupies $\lfloor K_0/2 \rfloor$ symbols among the $K_0$ symbols in the time domain, the first signal occupies remaining $K_0 - \lfloor K_0/2 \rfloor$ symbols among the $K_0$ symbols in the time domain, and the $K_0$ is a positive integer greater than 1.

As one embodiment, the $K_0$ is indicated by RRC signaling.

As one embodiment, the PUCCH resources used for signal transmission on the first PUCCH occupy the $K_0$ symbols in the time domain.

As one embodiment, the second signal comprises a wireless signal.

As one embodiment, the second signal comprises a signal for transmission of the UCI.

As one embodiment, the second signal comprises a signal for transmission of HARQ-ACK information.

As one embodiment, the second signal comprises a signal for transmission of the CSI.

As one embodiment, the second signal comprises a signal for transmission of the SR.

As one embodiment, the first signal and the second signal respectively comprise different parts in an output after at least UCI bit-based sequence generation and mapping to physical resources.

As one embodiment, the first signal and the second signal respectively comprise different parts in an output of a UCI bit block after at least sequence modulation and mapping to physical resources.

As one embodiment, the first signal and the second signal respectively comprise different parts in an output after at least UCI bit-based sequence generation and mapping to physical resources, or the first signal and the second signal respectively comprise different parts in an output of a UCI bit block after at least sequence modulation and mapping to physical resources.

As one embodiment, the first signal and the second signal respectively comprise different parts in an output of a UCI bit block after at least scrambling, modulation, and mapping to physical resources; or, the first signal and the second signal respectively comprise an output of UCI bit blocks after at least scrambling, modulation, transform precoding, and mapping to physical resources; or, the first signal and the second signal respectively comprise different parts in an output of UCI bit blocks after at least scrambling, modulation, block-wise spreading, transform precoding, and mapping to physical resources.

As one embodiment, the number of PRBs occupied by the second signal in the frequency domain is the same as the number of PRBs occupied by the first signal in the frequency domain.

As one embodiment, the second signal occupies only one PRB in the frequency domain.

As one embodiment, a benefit of the above method comprises: reducing the overhead of frequency domain resources.

As one embodiment, the second signal occupies a plurality of PRBs in the frequency domain.

As one embodiment, the second signal occupies a plurality of continuous PRBs in the frequency domain.

As one embodiment, the second signal occupies N continuous PRBs in the frequency domain, and the N is a configurable positive integer.

As one embodiment, the N is not greater than 16.

As one embodiment, the N is configured by RRC signaling.

As one embodiment, whether a second parameter is used for determining the minimum PRB index of the second signal depends on whether the first symbol set comprises the first-type symbol; when the first symbol set comprises the first-type symbol, the second parameter is used for determining the minimum PRB index of the second signal; and the second parameter is configurable.

As one embodiment, the minimum PRB index (lowest PRB index) of the second signal is: a minimum index of PRBs occupied by the second signal in the frequency domain.

As one embodiment, the minimum PRB index of the second signal is: an index of the first PRB occupied by the second signal in the frequency domain.

As one embodiment, the minimum PRB index of the second signal is: an index of a starting PRB occupied by the second signal in the frequency domain.

As one embodiment, the minimum PRB index of the second signal is an index of the first PRB; and the first PRB is one PRB occupied by the second signal in the frequency domain, and an index of any PRB occupied by the second signal in the frequency domain is not less than the minimum PRB index of the second signal.

As one embodiment, when the second signal occupies only one PRB in the frequency domain, the minimum PRB index of the second signal is: an index of the only one PRB occupied by the second signal.

As one embodiment, when the first symbol set comprises the at least one first-type symbol, the number of PRBs occupied by the second signal is equal to W, and the W is a positive integer greater than 1 configured by RRC signaling; and when the first symbol set does not comprise the first-type symbol, the number of PRBs occupied by the second signal is equal to 1.

As one embodiment, when the first symbol set comprises the at least one first-type symbol, the number of PRBs occupied by the second signal is equal to 1; and when the first symbol set does not comprise the first-type symbol, the number of PRBs occupied by the second signal is equal to W, and the W is a positive integer greater than 1 configured by RRC signaling.

As one embodiment, when the second symbol set in the present application comprises the at least one first-type symbol, the number of PRBs occupied by the second signal is equal to W, and the W is a positive integer greater than 1 configured by RRC signaling; and when the second symbol set in the present application does not comprise the first-type symbol, the number of PRBs occupied by the second signal is equal to 1.

As one embodiment, when the second symbol set in the present application comprises the at least one first-type symbol, the number of PRBs occupied by the second signal is equal to 1; and when the second symbol set in the present application does not comprise the first-type symbol, the number of PRBs occupied by the second signal is equal to W, and the W is a positive integer greater than 1 configured by RRC signaling.

As one embodiment, when the first symbol set comprises the at least one first-type symbol, the number of PRBs occupied by the first signal is equal to W, and the W is a positive integer greater than 1 configured by RRC signaling; and when the first symbol set does not comprise the first-type symbol, the number of PRBs occupied by the first signal is equal to 1.

As one embodiment, when the first symbol set comprises the at least one first-type symbol, the number of PRBs occupied by the first signal is equal to 1; and when the first symbol set does not comprise the first-type symbol, the number of PRBs occupied by the first signal is equal to W, and the W is a positive integer greater than 1 configured by RRC signaling.

As one embodiment, a benefit of the above method comprises: realizing a good trade-off between PUCCH transmission performance and PUCCH resource overhead.

As one embodiment, the first signaling is used for determining the minimum PRB index of the first signal.

As one embodiment, when the first symbol set overlaps with one first-type symbol, the first symbol set comprises the first-type symbol; and when the first symbol set does not overlap with one first-type symbol, the first symbol set does not comprise the first-type symbol.

As one embodiment, when one first-type symbol is one symbol in the first symbol set, the first symbol set comprises the first-type symbol; and when one first-type symbol is not a symbol in the first symbol set, the first symbol set does not comprise the first-type symbol.

As one embodiment, whether a first parameter is used for determining the minimum PRB index of the first signal depends on whether the first symbol set comprises the first-type symbol, and the first parameter is configurable.

As one embodiment, when the first symbol set comprises the at least one first-type symbol, the first parameter is used for determining the minimum PRB index of the first signal.

As one embodiment, when the first symbol set does not comprise the first-type symbol, the first parameter is not used for determining the minimum PRB index of the first signal.

As one embodiment, signal transmission on the first PUCCH does not adopt frequency hopping; and when the first symbol set comprises the at least one first-type symbol, the minimum PRB index of the first signal is determined to be: a result of taking the modulo 7 of a sum of a product of a value of the first parameter and 4.66 rounded up and 2.8 to the power of a number of bits include in a field used to configure the first parameter.

As one embodiment, signal transmission on the first PUCCH adopts frequency hopping, and the first signal is in a second hop; and when the first symbol set comprises at least one first-type symbol, the minimum PRB index of the first signal is determined to be a result of a linear combination of a plurality of values, wherein the plurality of values comprise a first value and a second value, the first value depends on the first parameter, and the second value depends on an index of a first CCE of a PDCCH used for receiving the first signaling.

As one embodiment, the expression of "whether at least one symbol indicated by the first RRC signaling as a downlink symbol is the first-type symbol depends on the first information block" means: whether one symbol indicated by the first RRC signaling as a downlink symbol is the first-type symbol depends on the first information block.

As one embodiment, the expression of "whether at least one symbol indicated by the first RRC signaling as a downlink symbol is the first-type symbol depends on the first information block" means: whether a plurality of symbols indicated by the first RRC signaling as downlink symbols are the first-type symbol depends on the first information block.

As one embodiment, the first information block is used for determining whether one or more symbols indicated by the first RRC signaling as downlink symbols are the first-type symbol.

As one embodiment, whether one or more symbols indicated by the first RRC signaling as downlink symbols are the first-type symbol is determined by a configuration of the first information block.

As one embodiment, symbols that are configured by the first information block as being outside of symbols available for full-duplex operations and that are indicated by the first RRC signaling as downlink symbols are not the first-type symbol.

As one embodiment, symbols that are configured by the first information block as being available for full-duplex operations and that are indicated by the first RRC signaling as downlink symbols are the first-type symbol.

As one embodiment, any of the first-type symbol is a symbol configured by the first information block as available for full-duplex operations.

As one embodiment, symbols other than symbols configured by the first information block for full-duplex modes and indicated by the first RRC signaling as downlink symbols are not the first-type symbol.

As one embodiment, symbols configured by the first information block for full-duplex modes and indicated by the first RRC signaling as downlink symbols are the first-type symbol.

As one embodiment, any of the first-type symbol is a symbol configured by the first information block for full-duplex modes.

As one embodiment, a benefit of the above method comprises: facilitating support for full-duplex operations.

As one embodiment, the first information block comprises one bit sequence, each bit in the bit sequence is mapped to at least one symbol, and a symbol corresponding to one bit set to 0 in the bit sequence is the first-type symbol.

As one sub-embodiment of the above embodiment, a symbol corresponding to one bit set to 1 in the bit sequence is not the first-type symbol.

As one embodiment, the first information block comprises one bit sequence, each bit in the bit sequence is mapped to at least one symbol, and a symbol corresponding to one bit set to 1 in the bit sequence is the first-type symbol.

As one sub-embodiment of the above embodiment, a symbol corresponding to one bit set to 0 in the bit sequence is not the first-type symbol.

As one embodiment, when a first symbol is indicated by the first RRC signaling as a downlink symbol and is a symbol explicitly indicated by the first information block, the first symbol is the first-type symbol.

As one embodiment, one symbol in the present application is a time domain symbol.

As one embodiment, one symbol in the present application is an OFDM (Orthogonal Frequency Division Multiplexing) symbol.

As one embodiment, one symbol in the present application is a symbol in a slot.

As one embodiment, one symbol in the present application comprises one time duration in the time domain.

As one embodiment, when the first symbol set comprises the at least one first-type symbol, the minimum PRB index of the first signal is an index of a PRB randomly selected by the first node from 37 PRBs configured by RRC signaling; and when the first symbol set does not comprise the first-type symbol, the minimum PRB index of the first signal is determined by the first node itself.

## Embodiment 2

Embodiment 2 illustrates a schematic diagram of one network architecture according to the present application, as shown in FIG. 2.

FIG. 2 illustrates a diagram of a network architecture 200 for 5G NR, LTE (Long-Term Evolution) and LTE-A (Long-Term Evolution Advanced) systems. The 5G NR or LTE network architecture 200 may be referred to as an EPS (Evolved Packet System) 200 or some other suitable terminologies. The EPS 200 may comprise one or more pieces of UE (User Equipment) 201, an NG-RAN (Next Generation Radio Access Network) 202, an EPC (Evolved Packet Core)/5G-CN (5G-Core Network) 210, an HSS (Home Subscriber Server) 220, and an Internet service 230. The EPS may be interconnected with other access networks, but these entities/interfaces are not shown for simplicity. As shown in figures, the EPS provides packet switching services, but those skilled in the art will readily appreciate that the various concepts presented throughout the present application may be extended to networks that provide circuit switching services or other cellular networks. The NG-RAN comprises an NR Node B (gNB) 203 and other gNB204. The gNB203 provides user and control plane protocol terminations toward the UE201. The gNB203 may be connected to other gNB204 via an Xn interface (e.g., backhaul). The gNB203 may also be referred to as a base station, a base transceiving station, a radio base station, a radio transceiving device, a transceiving device function, a basic service set (BSS), an extended service set (ESS), a TRP (Transmitter Receiver Point), or some other suitable terminologies. The gNB203 provides an access point to the EPC/5G-CN 210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the EPC/5G-CN 210 via an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Date Network Gateway) 213. The MME/AMF/UPF211 is a control node that processes signaling between the UE201 and the EPC/5G-CN 210. Generally, the MME/AMF/UPF211 provides bearer and connection management. All user IP (Internet Protocol) packets are transmitted through the S-GW212, and the S-GW212 is itself connected to the P-GW213. The P-GW213 provides UE IP address allocation and other functions. The P-GW213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 corresponds to the first node in the present application.

As one embodiment, the gNB203 corresponds to the second node in the present application.

As one embodiment, the UE201 corresponds to the first node in the present application, and the gNB203 corresponds to the second node in the present application.

As one embodiment, the gNB203 is a MacroCellular base station.

As one embodiment, the gNB203 is a Micro Cell base station.

As one embodiment, the gNB203 is a PicoCell base station.

As one embodiment, the gNB203 is a home base station (Femtocell).

As one embodiment, the gNB203 is a base station device that supports a large latency difference.

As one embodiment, the gNB203 is one flying platform device.

As one embodiment, the gNB203 is a satellite device.

## Embodiment 3

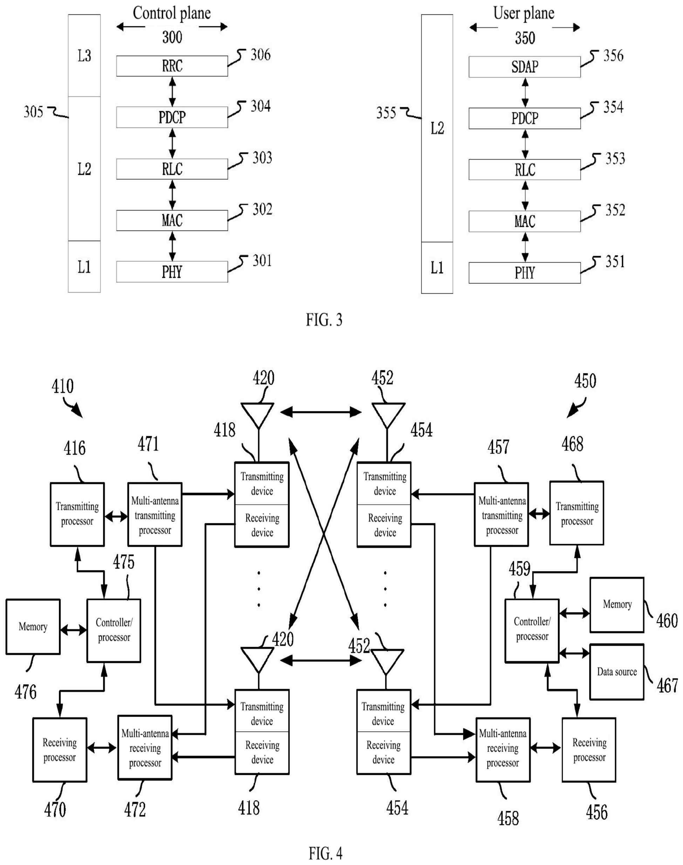

Embodiment 3 shows a schematic diagram of an embodiment of a wireless protocol architecture for a user plane and a control plane according to the present application, as shown in FIG. 3. FIG. 3 is a schematic diagram illustrating an embodiment of a wireless protocol architecture for a user plane 350 and a control plane 300. FIG. 3 shows the radio protocol architecture for the control plane 300 between a first communication node device (UE, gNB, or RSU in V2X) and a second communication node device (gNB, UE, or RSU in V2X), or between two pieces of UE, using three layers: Layer 1, Layer 2, and Layer 3. The Layer 1 (L1 layer) is the lowest layer and implements various PHY (physical layer) signal processing functions. The L1 layer will be referred to as PHY301 herein. The Layer 2 (L2 layer) 305 is above PHY301, and is responsible for links between the first communication node device and the second communication node device and two pieces of UE through the PHY301. The L2 layer 305 comprises a MAC (Medium Access Control) sublayer 302, an RLC (Radio Link Control) sublayer 303, and a PDCP (Packet Data Convergence Protocol) sublayer 304, which terminate at the second communication node device. The PDCP sublayer 304 provides multiplexing between different radio bearers and logical channels. The PDCP sublayer 304 also provides security by encrypting data packets, and provides handover support of the first communication node device between the second communication node devices. The RLC sublayer 303 provides segmentation and reassembly of upper-layer data packets, retransmission of lost data packets, and reordering of data packets to compensate for out-of-order reception due to HARQ. The MAC sublayer 302 provides multiplexing between logical and transport channels. The MAC sublayer 302 is also responsible for allocating various radio resources (e.g., resource blocks) in one cell between first communication node devices. The MAC sublayer 302 is also responsible for HARQ operations. An RRC (Radio Resource Control) sublayer 306 in a Layer 3 (L3 layer) in the control plane 300 is responsible for obtaining radio resources (i.e., radio bearers) and configuring lower layers using RRC signaling between the second communication node device and the first communication node device. The radio protocol architecture of the user plane 350 comprises the Layer 1 (L1 layer) and the Layer 2 (L2 layer). The radio protocol architecture for the first communication node device and the second communication node device in the user plane 350 is substantially the same as corresponding layers and sublayers in the control plane 300 for a physical layer 351, a PDCP sublayer 354 in the L2 layer 355, an RLC sublayer 353 in the L2 layer 355, and a MAC sublayer 352 in the L2 layer 355, but the PDCP sublayer 354 also provides header compression for upper-layer data packets to reduce radio transmission overhead. The L2 layer 355 in the user plane 350 further comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper layers above the L2 layer 355, comprising a network layer (e.g., an IP layer) terminating at a P-GW on a network side and an application layer terminating at another end (e.g., remote UE, a server, etc.) of the connection.

As one embodiment, the wireless protocol architecture in FIG. 3 is applicable to the first node in the present application.

As one embodiment, the wireless protocol architecture in FIG. 3 is applicable to the second node in the present application.

As one embodiment, the first RRC signaling in the present application is generated in the RRC sublayer 306.

As one embodiment, the first information block in the present application is generated in the RRC sublayer 306.

As one embodiment, the first information block in the present application is generated in the MAC sublayer 302.

As one embodiment, the first information block in the present application is generated in the PHY301.

As one embodiment, the first signaling in the present application is generated in the PHY301.

As one embodiment, the first signal in the present application is generated in the PHY301.

## Embodiment 4

Embodiment 4 shows a schematic diagram of a first communication device and a second communication device according to the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transmission from the first communication device 410 to the second communication device 450, at the first communication device 410, upper-layer data packets from a core network are provided to a controller/processor 475. The controller/processor 475 implements functionality of an L2 layer. In the transmission from the first communication device 410 to the first communication device 450, the controller/processor 475 provides header compression, encryption, packet segmentation and reordering, multiplexing between logical and transport channels, and radio resource allocation to the second communication device 450 based on various priority metrics. The controller/processor 475 is also responsible for retransmission of lost packets and signaling to the second communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 450, and signal clustering mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more spatial streams. The transmitting processor 416 then maps each spatial stream to a subcarrier, multiplexes each spatial stream with a reference signal (e.g., pilot frequency) in a time domain and/or frequency domain, and then uses an inverse fast Fourier transform (IFFT) to generate a physical channel carrying a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, converts the radio frequency stream into a baseband multi-carrier symbol stream, and provides the baseband multi-carrier symbol stream to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from receiving devices 454. The receiving processor 456 uses a fast Fourier transform (FFT) to convert the baseband multi-carrier symbol stream from the time domain to the frequency domain after the receiving analog precoding/beamforming operations. In the frequency domain, a physical layer data signal and a reference signal are demultiplexed by the receiving processor 456, wherein the reference signal will be used for channel estimation, and the data signal is subjected to multi-antenna detection in the multi-antenna receiving processor 458 to recover any spatial stream destined for the second communication device 450. The symbols on each spatial stream are demodulated and recovered in the receiving processor 456, and soft decisions are generated. The receiving processor 456 then decodes and deinterleaves the soft decisions to recover upper-layer data and control signals transmitted by the first communication device 410 on the physical channel. The upper-layer data and the control signals are then provided to the controller/processor 459. The controller/processor 459 implements the functions of the L2 layer. The controller/processor 459 may be associated with the memory 460 which stores program code and data. The memory 460 may be referred to as a computer-readable medium. In the transmission from the first communication device 410 to the second communication device 450, the controller/processor 459 provides demultiplexing between transport and logical channels, packet reassembly, decryption, header decompression, and control signal processing to recover upper-layer data packets from the core network. The upper-layer data packets are then provided to all protocol layers above the L2 layer. Various control signals may also be provided to the L3 for L3 processing.

In transmission from the second communication device 450 to the first communication device 410, at the second communication device 450, the data source 467 is used for providing upper-layer data packets to the controller/processor 459. The data source 467 represents all protocol layers above the L2 layer. Similar to the transmission function at the first communication device 410 described in the transmission from the first communication device 410 to the second communication device 450, the controller/processor 459 implements header compression, encryption, packet segmentation and reordering, and multiplexing between logical and transport channels based on radio resource allocation, and implements L2 layer functions for the user plane and the control plane. The controller/processor 459 is also responsible for retransmission of lost packets and signaling to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the produced spatial stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the second communication device 450 to the first communication device 410, the functions at the first communication device 410 are similar to the receiving functions at the second communication device 450 described in the transmission from the first communication device 410 to the second communication device 450. Each receiving device 418 receives a radio frequency signal through its corresponding antenna 420, converts the received radio frequency signal into a baseband signal, and provides the base band signal to the multi-antenna receiving processor 472 and the receiving processor 470. The receiving processor 470 and the multi-antenna receiving processor 472 jointly implement the functions of the L1 layer. The controller/processor 475 implements functions of the L2 layer. The controller/processor 475 may be associated with the memory 476 which stores program code and data. The memory 476 may be referred to as a computer-readable medium. In the transmission from the second communication device 450 to the first communication device 410, the controller/processor 475 provides demultiplexing between transport and logical channels, packet reassembly, decryption, header decompression, and control signal processing to recover the upper-layer data packets from the UE450. The upper-layer data packets from the controller/processor 475 may be provided to the core network.

As one embodiment, the first node in the present application comprises the second communication device 450, and the second node in the present application comprises the first communication device 410.

As one sub-embodiment of the above embodiment, the first node is user equipment, and the second node is a relay node.

As one sub-embodiment of the above embodiment, the first node is user equipment, and the second node is a base station device.

As one sub-embodiment of the above embodiment, the first node is a relay node, and the second node is a base station device.

As one sub-embodiment of the above embodiment, the second communication device 450 comprises: at least one controller/processor; and the at least one controller/processor is responsible for HARQ operations.

As one sub-embodiment of the above embodiment, the first communication device 410 comprises: at least one controller/processor; and the at least one controller/processor is responsible for HARQ operations.

As one sub-embodiment of the above embodiment, the first communication device 410 comprises: at least one controller/processor; and the at least one controller/processor is responsible for error detection using positive acknowledgement (ACK) and/or negative acknowledgement (NACK) protocols to support HARQ operations.

As one embodiment, the second communication device 450 comprises: at least one processor and at least one memory, the at least one memory comprising computer program code; and the at least one memory and the computer program code are configured to be used together with the at least one processor. The second communication device 450 apparatus at least: receives first RRC signaling and a first information block, wherein at least one symbol is indicated by the first RRC signaling as a downlink symbol; receives first signaling; and transmits at least a first signal on a first PUCCH, wherein a first symbol set comprises symbols occupied by the first signal in a time domain; wherein a minimum PRB index of the first signal depends on the first signaling as well as whether the first symbol set comprises a first-type symbol, and whether at least one symbol indicated by the first RRC signaling as a downlink symbol is the first-type symbol depends on the first information block.

As one sub-embodiment of the above embodiment, the second communication device 450 corresponds to the first node in the present application.

As one embodiment, the second communication device 450 comprises: a memory storing a computer-readable instruction program, wherein the computer-readable instruction program generates actions when executed by at least one processor, and the actions comprise: receiving first RRC signaling and a first information block, where at least one symbol is indicated by the first RRC signaling as a downlink symbol; receiving first signaling; and transmitting at least a first signal on a first PUCCH, wherein a first symbol set comprises symbols occupied by the first signal in a time domain; wherein a minimum PRB index of the first signal depends on the first signaling as well as whether the first symbol set comprises a first-type symbol, and whether at least one symbol indicated by the first RRC signaling as a downlink symbol is the first-type symbol depends on the first information block.

As one sub-embodiment of the above embodiment, the second communication device 450 corresponds to the first node in the present application.

As one embodiment, the first communication device 410 comprises: at least one processor and at least one memory, the at least one memory comprising computer program code; and the at least one memory and the computer program code are configured to be used together with the at least one processor. The first communication device 410 apparatus at least: transmits first RRC signaling and a first information block, wherein at least one symbol is indicated by the first RRC signaling as a downlink symbol; transmits first signaling; and receives at least a first signal on a first PUCCH, wherein a first symbol set comprises symbols occupied by the first signal in a time domain, wherein a minimum PRB index of the first signal depends on the first signaling as well as whether the first symbol set comprises a first-type symbol, and whether at least one symbol indicated by the first RRC signaling as a downlink symbol is the first-type symbol depends on the first information block.

As one sub-embodiment of the above embodiment, the first communication device 410 corresponds to the second node in the present application.

As one embodiment, the first communication device 410 comprises: a memory storing a computer-readable instruction program, wherein the computer-readable instruction program generates actions when executed by at least one processor, and the actions comprise: transmitting first RRC signaling and a first information block, wherein at least one symbol is indicated by the first RRC signaling as a downlink symbol; transmitting first signaling; and receiving at least a first signal on a first PUCCH, wherein a first symbol set comprises symbols occupied by the first signal in a time domain, wherein a minimum PRB index of the first signal depends on the first signaling as well as whether the first symbol set comprises a first-type symbol, and whether at least one symbol indicated by the first RRC signaling as a downlink symbol is the first-type symbol depends on the first information block.

As one sub-embodiment of the above embodiment, the first communication device 410 corresponds to the second node in the present application.

As one embodiment, at least one of {the antenna 452, the receiving device 454, the multi-antenna receiving processor 458, the receiving processor 456, the controller/processor 459, the memory 460, and the data source 467} is used for receiving the first RRC signaling in the present application.

As one embodiment, at least one of {the antenna 420, the transmitting device 418, the multi-antenna transmitting processor 471, the transmitting processor 416, the controller/processor 475, and the memory 476} is used for transmitting the first RRC signaling in the present application.

As one embodiment, at least one of {the antenna 452, the receiving device 454, the multi-antenna receiving processor 458, the receiving processor 456, the controller/processor 459, the memory 460, and the data source 467} is used for receiving the first information block in the present application.

As one embodiment, at least one of {the antenna 420, the transmitting device 418, the multi-antenna transmitting processor 471, the transmitting processor 416, the controller/processor 475, and the memory 476} is used for transmitting the first information block in the present application.

As one embodiment, at least one of {the antenna 452, the receiving device 454, the multi-antenna receiving processor 458, the receiving processor 456, the controller/processor 459, the memory 460, and the data source 467} is used for receiving the first signaling in the present application.

As one embodiment, at least one of {the antenna 420, the transmitting device 418, the multi-antenna transmitting processor 471, the transmitting processor 416, the controller/processor 475, and the memory 476} is used for transmitting the first signaling in the present application.

As one embodiment, at least one of {the antenna 452, the transmitting device 454, the transmitting processor 458, the multi-antenna transmitting processor 468, the controller/processor 459, the memory 460, and the data source 467} is used for transmitting the first signal in the present application.

As one embodiment, at least one of {the antenna 420, the receiving device 418, the receiving processor 472, the multi-antenna receiving processor 470, the controller/processor 475, and the memory 476} is used for receiving the first signal in the present application.

As one embodiment, at least one of {the antenna 452, the transmitting device 454, the transmitting processor 458, the multi-antenna transmitting processor 468, the controller/processor 459, the memory 460, and the data source 467} is used for transmitting the second signal in the present application.

As one embodiment, at least one of {the antenna 420, the receiving device 418, the multi-antenna receiving processor 472, the receiving processor 470, the controller/processor 475, and the memory 476} is used for receiving the second signal in the present application.

## Embodiment 5

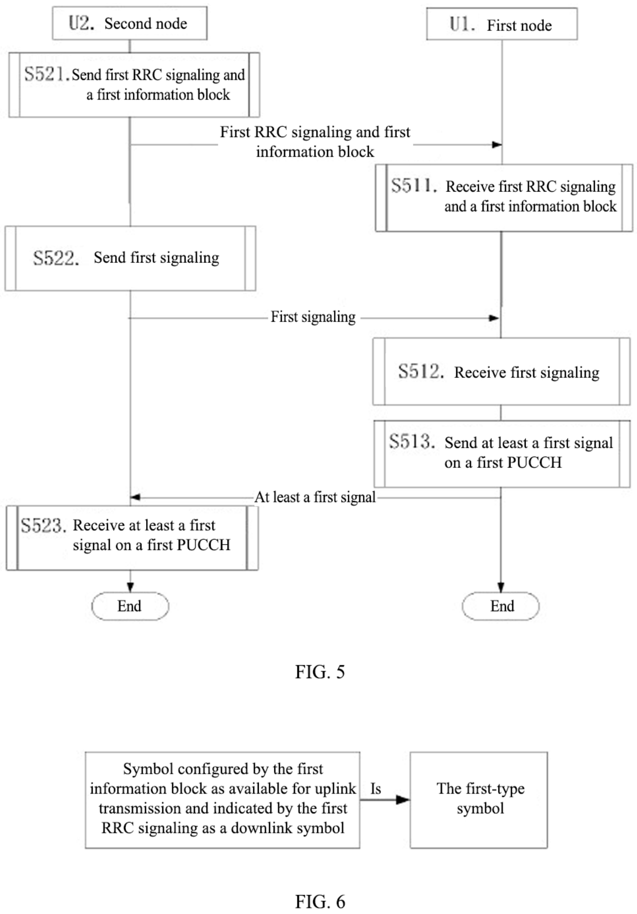

Embodiment 5 illustrates a signal transmission flow chart according to one embodiment of the present application, as shown in FIG. 5. In FIG. 5, a first node U1 and a second node U2 communicate through an air interface.

The first node U1 receives first RRC signaling and a first information block in step S511; receives first signaling in step S512; and transmits at least a first signal on a first PUCCH in step S513.

The second node U2 transmits first RRC signaling and a first information block in step S521; transmits first signaling in step S522; and receives at least a first signal on a first PUCCH in step S523.

In Embodiment 5, at least one symbol is indicated by the first RRC signaling as a downlink symbol, and the first RRC signaling is tdd-UL-DL-ConfigurationCommon; a first symbol set comprises symbols occupied by the first signal in a time domain; and a symbol configured by the first information block as available for uplink transmission and indicated by the first RRC signaling as a downlink symbol belongs to the first-type symbol; whether a first parameter is used for determining the minimum PRB index of the first signal depends on whether the first symbol set comprises the first-type symbol, and the first parameter is configurable; the signal transmission on the first PUCCH adopts frequency hopping, and the first signal is in a first hop; and when the first symbol set comprises the at least one first-type symbol, the minimum PRB index of the first signal is determined to be $RB_{\text{BWP}}^{\text{offset}} \cdot N_{RB} + V1 + \lfloor r_{\text{PUCCH}}/N_{\text{CS}} \rfloor \cdot N_{RB}$; the $V1$ is a value provided by the first parameter, the $r_{\text{PUCCH}}$ depends on an index of a first CCE of a PDCCH used for receiving the first signaling; the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling; when the first symbol set does not comprise the first-type symbol, the minimum PRB index of the first signal is determined to be $RB_{\text{BWP}}^{\text{offset}} \cdot N_{RB} + \lfloor r_{\text{PUCCH}}/N_{\text{CS}} \rfloor \cdot N_{RB}$.

As one sub-embodiment of Embodiment 5, the number of PRBs occupied by the first signal depends on whether the first symbol set comprises the first-type symbol.

As one sub-embodiment of Embodiment 5, the index of the first CCE of the PDCCH used for receiving the first signaling and a PUCCH resource indicator field in the first signaling are both used for determining PUCCH resources for signal transmission on the first PUCCH.

As one sub-embodiment of Embodiment 5, the signal transmission on the first PUCCH further comprises a second signal, and the second signal is in a second hop; when the first symbol set comprises the at least one first-type symbol, a minimum PRB index of the second signal is determined as $N_{\text{BWP}}^{\text{size}} - RB_{\text{BWP}}^{\text{offset}} \cdot N_{RB} - V2 - (1 + \lfloor (r_{\text{PUCCH}}-8)/N_{\text{CS}} \rfloor) \cdot N_{RB}$; the $V2$ is a value provided by the second parameter, and the $N_{\text{BWP}}^{\text{size}}$ is a size of an initial UL BWP; when the first symbol set does not comprise the first-type symbol, the minimum PRB index is determined to be $N_{\text{BWP}}^{\text{size}} - RB_{\text{BWP}}^{\text{offset}} \cdot N_{RB} - (1 + \lfloor (r_{\text{PUCCH}}-8)/N_{\text{CS}} \rfloor) \cdot N_{RB}$.

As one embodiment, the first node U1 is the first node in the present application.

As one embodiment, the second node U2 is the second node in the present application.

As one embodiment, the first node U1 is one piece of UE.

As one embodiment, the second node U2 is one base station.

As one embodiment, an air interface between the second node U2 and the first node U1 is a Uu interface.

As one embodiment, an air interface between the second node U2 and the first node U1 comprises a cellular link.

As one embodiment, an air interface between the second node U2 and the first node U1 comprises a wireless interface between a base station device and user equipment.

As one embodiment, an air interface between the second node U2 and the first node U1 comprises a wireless interface between a satellite device and user equipment.

As one embodiment, the air interface between the second node U2 and the first node U1 comprises a wireless interface between a relay node device and user equipment.

As one embodiment, the first RRC signaling is transmitted/received before the first information block.

As one embodiment, the first RRC signaling is transmitted/received after the first information block.

As one embodiment, the first RRC signaling and the first information block are transmitted/received simultaneously.

**Embodiment 6**

FIG. 6 shows a schematic diagram of a relationship between a symbol indicated by the first RRC signaling as a downlink symbol and a first-type symbol according to one embodiment of the present application, as shown in FIG. 6.

In Embodiment 6, a symbol configured by the first information block as available for uplink transmission and indicated by the first RRC signaling as a downlink symbol is the first-type symbol.

As one embodiment, a benefit of the above method comprises: improving the uplink scheduling flexibility by using the symbol indicated by the first RRC signaling as the downlink symbol but available for uplink transmission to transmit the first signal.

As one embodiment, the first RRC signaling is tdd-UL-DL-ConfigurationCommon, and a symbol configured by the first information block as available for uplink transmission and indicated by the first RRC signaling as a downlink symbol is the first-type symbol.

As one embodiment, a benefit of the above method comprises: improving the uplink scheduling flexibility by using the symbol indicated by the tdd-UL-DL-ConfigurationCommon as the downlink symbol but available for uplink transmission to transmit the first signal.

As one embodiment, the first RRC signaling is tdd-UL-DL-ConfigurationDedicated, and a symbol configured by the first information block as available for uplink transmission and indicated by the first RRC signaling as a downlink symbol is the first-type symbol.

As one embodiment, a benefit of the above method comprises: improving the uplink scheduling flexibility by using the symbol indicated by the tdd-UL-DL-ConfigurationDedicated as the downlink symbol but available for uplink transmission to transmit the first signal.

As one embodiment, the first RRC signaling comprises tdd-UL-DL-ConfigurationCommon and tdd-UL-DL-ConfigurationDedicated, and a symbol configured by the first information block as available for uplink transmission and indicated by the first RRC signaling as a downlink symbol is the first-type symbol.

As one embodiment, a benefit of the above method comprises: improving the uplink scheduling flexibility by using the symbol indicated by the tdd-UL-DL-ConfigurationCommon or the tdd-UL-DL-ConfigurationDedicated as the downlink symbol but available for uplink transmission to transmit the first signal.

As one embodiment, any of the first-type symbol is a symbol configured by the first information block as available for uplink transmission.

As one embodiment, the meaning of the expression of "available for uplink transmission" is: at least available for PUCCH (Physical uplink control channel) transmission.

As one embodiment, the meaning of the expression of "available for uplink transmission" comprises: at least available for PUSCH (Physical uplink shared channel) transmission and the PUCCH transmission.

As one embodiment, the meaning of the expression of "available for uplink transmission" comprises: available for the PUSCH transmission, the PUCCH transmission, and SRS (Sounding Reference Signal) transmission.

As one embodiment, the meaning of the expression of "available for uplink transmission" comprises: available for the PUSCH transmission, the PUCCH transmission, PRACH (Physical Random Access Channel) transmission, and the SRS transmission.

As one embodiment, the meaning of the expression of "available for uplink transmission" comprises: available for UL-SCH (Uplink Shared Channel) transmission.

As one embodiment, the first symbol is a symbol indicated by the first RRC signaling as a downlink symbol; if the first symbol is configured by the first information block as available for uplink transmission, the first symbol is the first-type symbol; otherwise, the first symbol is not the first-type symbol.

As one embodiment, a symbol indicated by the first RRC signaling as an uplink symbol is not the first-type symbol.

As one embodiment, whether a symbol indicated by the first RRC signaling as a flexible symbol is the first-type symbol is configured by the first information block.

As one embodiment, whether a symbol used for SS/PBCH block (synchronization signal and physical broadcast channel block) reception is the first-type symbol is configured by the first information block.

As one embodiment, a benefit of the above method comprises: being beneficial to ensuring the reception performance of the SS/PBCH block through reasonable configuration.

As one embodiment, a symbol for receiving a SS/PBCH block (synchronization signal and physical broadcast channel block) is not the first-type symbol.

**Embodiment 7**

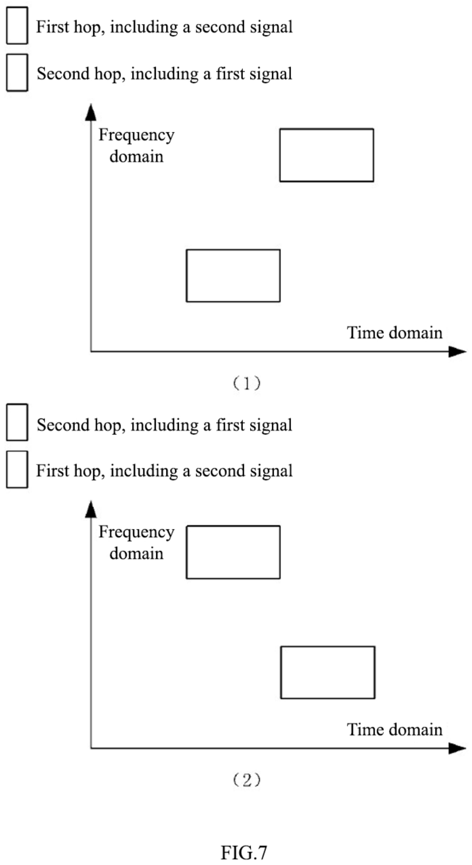

Embodiment 7 shows an illustration schematic diagram of signal transmission on a first PUCCH according to one embodiment of the present application, as shown in FIG. 7. FIG. 7 comprises two different cases, comprising case (1) and case (2); in case (1), signal transmission on the first PUCCH uses frequency hopping, signals transmitted on the first PUCCH comprise a first signal and a second signal, the first signal is in a first hop (represented by a gray filled box), and the second signal is in a second hop (represented by a blank box); and in case (2), signal transmission on the first PUCCH uses frequency hopping, signals transmitted on the first PUCCH comprise a first signal and a second signal, the first signal is in a second hop (represented by a gray filled box), and the second signal is in a first hop (represented by a blank box).

In case (1) in Embodiment 7, the minimum PRB index of the first signal is related to $r_{\text{PUCCH}}$, the $r_{\text{PUCCH}}$ depends on an index of a first CCE of a PDCCH used for receiving the first signaling, and $\lfloor r_{\text{PUCCH}}/8 \rfloor = 0$.

In case (2) in Embodiment 7, the minimum PRB index of the first signal is related to $r_{\text{PUCCH}}$, the $r_{\text{PUCCH}}$ depends on an index of a first CCE of a PDCCH used for receiving the first signaling, and $\lfloor r_{\text{PUCCH}}/8 \rfloor = 1$.

As one sub-embodiment of case (1) in Embodiment 7, a signal transmitted in the first hop comprises a DMRS (Demodulation reference signal), and a signal transmitted in the second hop comprises a DMRS.

As one sub-embodiment of case (1) in Embodiment 7, a signal transmitted in the first hop only comprises the first signal, and a signal transmitted in the second hop only comprises the second signal.

As one sub-embodiment of case (2) in Embodiment 7, a signal transmitted in the first hop comprises a DMRS, and a signal transmitted in the second hop comprises a DMRS.

As one sub-embodiment of case (2) in Embodiment 7, a signal transmitted in the second hop only comprises the first signal, and a signal transmitted in the first hop only comprises the second signal.

As one embodiment, the first hop and the second hop are continuous in the time domain.

As one embodiment, the first hop and the second hop are in the same slot.

As one embodiment, only when the first symbol set comprises the at least one first-type symbol, the first parameter is used for determining the minimum PRB index of the first signal; and the first parameter is configurable.

As one embodiment, when the first symbol set comprises at least one of the first-type symbol, the minimum PRB index of the first signal is determined to be $RB_{\text{BWP}}^{\text{offset}} \cdot N_{RB} + V1 + \lfloor r_{\text{PUCCH}}/N_{\text{CS}} \rfloor \cdot N_{RB}$ ; the V1 is a value provided by the first parameter, the $r_{\text{PUCCH}}$ depends on an index of a first CCE of a PDCCH used for receiving the first signaling; the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, a benefit of the above method comprises: improving adaptability between the resources occupied by the PUCCH transmission when dedicated PUCCH resources are not configured and the symbol type.

As one embodiment, when the first symbol set comprises the at least one first-type symbol, the minimum PRB index of the first signal is determined to be $RB_{\text{BWP}}^{\text{offset}} \cdot N_{RB} + V1 \cdot N_{RB} + \lfloor r_{\text{PUCCH}}/N_{\text{CS}} \rfloor \cdot N_{RB}$ ; the V1 is a value provided by the first parameter, the $r_{\text{PUCCH}}$ depends on an index of a first CCE of a PDCCH used for receiving the first signaling; the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, a benefit of the above method comprises: improving adaptability between the resources occupied by the PUCCH transmission when dedicated PUCCH resources are not configured and the symbol type.

As one embodiment, when the first symbol set comprises the at least one first-type symbol, the minimum PRB index of the first signal is determined to be $\_ RB_{\text{BWP}}^{\text{offset}} \cdot N_{RB} + (V1 - N_{\text{BWP}}^{\text{start}}) + \lfloor r_{\text{PUCCH}}/N_{\text{CS}} \rfloor \cdot N_{RB}$ ; the V1 is a value provided by the first parameter, the $r_{\text{PUCCH}}$ depends on an index of a first CCE of a PDCCH used for receiving the first signaling, and the $N_{\text{BWP}}^{\text{start}}$ is an index of a starting common resource block of an initial UL BWP (Bandwidth part) (relative to common resource block 0); and the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, a benefit of the above method comprises: improving adaptability between the resources occupied by the PUCCH transmission when dedicated PUCCH resources are not configured and the symbol type.

As one embodiment, the first parameter is a parameter indicating an index of a starting common resource block of a configured frequency band (relative to common resource block 0).

As one embodiment, the first value in the present application is the V1.

As one embodiment, the first value in the present application is the $V1 \cdot N_{RB}$.

As one embodiment, the first value in the present application is $V1 - N_{\text{BWP}}^{\text{start}}$ .

As one embodiment, the second value in the present application is $\lfloor r_{\text{PUCCH}}/N_{\text{CS}} \rfloor \cdot N_{RB}$ .

As one embodiment, the first PUCCH resource set is a PUCCH resource set indicated by RRC signaling from a plurality of PUCCH resource sets, and the plurality of PUCCH resource sets are all pre-defined or configurable.

As one embodiment, for one PUCCH resource set of the plurality of PUCCH resource sets: a value of the defined PRB offset is predefined and is one of 0, 2, 3, 4, or is $\lfloor N_{\text{BWP}}^{\text{size}}/4 \rfloor$ , wherein the $N_{\text{BWP}}^{\text{size}}$ is a size of an initial UL BWP.

As one embodiment, for one PUCCH resource set among the plurality of PUCCH resource sets, the defined PUCCH format is pre-defined and is one of PUCCH format 0 or PUCCH format 1.

As one embodiment, for one PUCCH resource set among the plurality of PUCCH resource sets, the defined initial cyclic shift index set is pre-defined and comprises multiple initial cyclic shift indexes.

As one embodiment, one initial cyclic shift index set is {0,3}.

As one embodiment, one initial cyclic shift index set is {0,4,8}.

As one embodiment, one initial cyclic shift index set is {0,6}.

As one embodiment, one initial cyclic shift index set is {0,3,6.9}.

As one embodiment, the first signaling is one DCI format; the $r_{\text{PUCCH}} = \left\lfloor \frac{2 \cdot n_{\text{CCE},0}}{N_{\text{CCE}}} \right\rfloor + 2 \cdot \Delta_{\text{PRI}}$ , wherein the $N_{\text{CCE}}$ is a number of CCEs (Control channel element(s)) in a CORESET (Control resource set) received for a PDCCH (Physical downlink control channel) occupied by the first signaling, the $n_{\text{CCE},0}$ is an index of a first CCE received for the one PDCCH, and the $\Delta_{\text{PRI}}$ is a value of a PUCCH resource indicator field in the first signaling.

As one embodiment, the $r_{\text{PUCCH}}$ is an index of a PUCCH resource used for signal transmission on the first PUCCH.

As one embodiment, the first parameter is an RRC layer parameter.

As one embodiment, the first parameter is configured by an SIB.

As one embodiment, the first parameter is configured by an SIB1.

As one embodiment, the first parameter is configured by an SIB other than an SIB1.

As one embodiment, the first parameter is a parameter configured to a user supporting a full-duplex mode.

As one embodiment, when the first symbol set does not comprise the first-type symbol, the minimum PRB index of the first signal does not depend on the first parameter.

As one embodiment, when the first symbol set does not comprise the first-type symbol, the minimum PRB index of the first signal is determined to be $RB_{\text{BWP}}^{\text{offset}} \cdot N_{RB} + \lfloor r_{\text{PUCCH}}/N_{\text{CS}} \rfloor \cdot N_{RB}$ ; the $r_{\text{PUCCH}}$ depends on an index of a first CCE of a PDCCH used for receiving the first signaling; the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, whether a second parameter is used for determining the minimum PRB index of the second signal depends on whether the first symbol set comprises the first-type symbol; when the first symbol set comprises the first-type symbol, the second parameter is used for determining the minimum PRB index of the second signal; and the second parameter is configurable.

As one embodiment, when the first symbol set comprises the at least one first-type symbol, the minimum PRB index of the second signal is determined to be $N_{\text{BWP}}^{\text{size}} - RB_{\text{BWP}}^{\text{offset}} \cdot N_{RB} - V2 - (1 + \lfloor (r_{\text{PUCCH}} - 8)/N_{\text{CS}} \rfloor) \cdot N_{RB}$ $N_{RB}$ the V2 is a value provided by the second parameter, the $r_{\text{PUCCH}}$ depends on an index of a first CCE of a PDCCH used for receiving the first signaling, and the $N_{\text{BWP}}^{\text{size}}$ is a size of an initial UL BWP; and the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, when the first symbol set comprises the at least one first-type symbol, the minimum PRB index of the second signal is determined to be

$$N_{\text{BWP}}^{\text{size}} - RB_{\text{BWP}}^{\text{offset}} \cdot N_{RB} - V2 \cdot N_{RB} - (1 + \lfloor (r_{\text{PUCCH}} - 8)/N_{\text{CS}} \rfloor) \cdot N_{RB}$$ ; the V2 is a value provided by the second parameter, the $r_{\text{PUCCH}}$ depends on an index of a first CCE of the PDCCH used for receiving the first signaling, and the $N_{\text{BWP}}^{\text{size}}$ is a size of an initial UL BWP; and the $RB_{\text{BWP}}^{\text{offset}}$ is a PRB offset defined for a first PUCCH resource set, the $N_{\text{CS}}$ is a total number of initial cyclic shift indexes in an initial cyclic shift index set defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, when the first symbol set comprises the at least one first-type symbol, the minimum PRB index of the second signal is determined to be

$$N_{\text{BWP}}^{\text{size}} - RB_{\text{BWP}}^{\text{offset}} \cdot N_{RB} - (N_{\text{BWP}}^{\text{end}} - V2) - (1 + \lfloor (r_{\text{PUCCH}} - 8)/N_{\text{CS}} \rfloor) \cdot N_{RB}$$ ; the V2 is the value provided by the second parameter, the $r_{\text{PUCCH}}$ depends on an index of a first CCE of a PDCCH used for receiving the first signaling, the $N_{\text{BWP}}^{\text{size}}$ is a size of an initial UL BWP, the $N_{\text{BWP}}^{\text{end}}$ is an index of an ending common resource block of the initial UL BWP (relative to common resource block 0); and the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, the second parameter is a parameter indicating an index of an end common resource block of a configured frequency band (relative to common resource block 0).

As one embodiment, the second parameter is an RRC layer parameter.

As one embodiment, the second parameter is configured by an SIB.

As one embodiment, the second parameter is configured by an SIB1.

As one embodiment, the second parameter is configured by an SIB other than an SIB1.

As one embodiment, the second parameter is a parameter configured to a user supporting a full-duplex mode.

As one embodiment, the second parameter is not the first parameter, and the first parameter and the second parameter are respectively configured.

As one embodiment, the first parameter is configured for a first hop in frequency hopping, and the second parameter is configured for a second hop in frequency hopping.

As one embodiment, a benefit of the above method comprises: improving configuration flexibility.

As one embodiment, the second parameter is the first parameter, and the V2 is the V1.

As one embodiment, a benefit of the above method comprises: reducing the overhead of configuration signaling.

As one embodiment, when the first symbol set does not comprise the first-type symbol, a minimum PRB index of the second signal does not depend on the second parameter.

As one embodiment, when the first symbol set does not comprise the first-type symbol, a minimum PRB index of the second signal is determined as $N_{\text{BWP}}^{\text{size}} - RB_{\text{BWP}}^{\text{offset}} \cdot N_{RB} - (1 + \lfloor (r_{\text{PUCCH}} - 8)/N_{\text{CS}} \rfloor) \cdot N_{RB}$ ; the $r_{\text{PUCCH}}$ depends on an index of the first CCE of PDCCH used for receiving the first signaling, the $N_{\text{BWP}}^{\text{size}}$ is a size of an initial UL BWP; and the $RB_{\text{BWP}}^{\text{offset}}$ is for PRB offset defined for the first PUCCH resource set, the $N_{\text{CS}}$ is a total number of initial cyclic shift indexes in an initial cyclic shift index set defined for the first PUCCH resource set, the $N_{RB}$ is a number of PRBs used for each PUCCH resource in the first PUCCH resource set or is equal to 1, and the first PUCCH resource set is indicated by RRC signaling.

As one embodiment, the first symbol set does not comprise symbols occupied by the second signal in a time domain, and a minimum PRB index of the second signal does not depend on whether the first symbol set comprises the first-type symbol.

As one embodiment, the minimum PRB index of the second signal depends on whether a second symbol set comprises the first-type symbol, and the second symbol set is composed of symbols occupied by the second signal in the time domain.

As one embodiment, whether a second parameter is used for determining the minimum PRB index of the second signal depends on whether a second symbol set comprises the first-type symbol, and the second symbol set is composed of symbols occupied by the second signal in the time domain; when the second symbol set comprises the first-type symbol, the second parameter is used for determining the minimum PRB index of the second signal; and the second parameter is configurable.

As one embodiment, when the second symbol set comprises the at least one first-type symbol, the minimum PRB index of the second signal is determined to be

$$N_{\text{BWP}}^{\text{size}} - RB_{\text{BWP}}^{\text{offset}} \cdot N_{RB} - V2 - (1 + \lfloor (r_{\text{PUCCH}} - 8)/N_{\text{CS}} \rfloor) \cdot N_{RB}$$ the $V2$ is a value provided by the second parameter, the $r_{\text{PUCCH}}$ depends on an index of a first CCE of a PDCCH used for receiving the first signaling, and the $N_{\text{BWP}}^{\text{size}}$ is a size of an initial UL BWP; and the $RB_{\text{BWP}}^{\text{offset}}$ is a PRB offset defined for a first PUCCH resource set, the $N_{\text{CS}}$ is an initial cyclic shift index, the $N_{RB}$ is the number of PRBs for each PUCCH resource in the first PUCCH resource set or is equal to 1, and the first PUCCH resource set is indicated by RRC signaling.

As one embodiment, when the second symbol set comprises the at least one first-type symbol, the minimum PRB index of the second signal is determined to be

$$N_{\text{BWP}}^{\text{size}} - RB_{\text{BWP}}^{\text{offset}} \cdot N_{RB} - V2 \cdot N_{RB} - (1 + \lfloor (r_{\text{PUCCH}} - 8)/N_{\text{CS}} \rfloor) \cdot N_{RB}$$ ; the $V2$ is a value provided by the second parameter, the $r_{\text{PUCCH}}$ depends on an index of a first CCE of the PDCCH used for receiving the first signaling, and the $N_{\text{BWP}}^{\text{size}}$ is a size of an initial UL BWP; and the $RB_{\text{BWP}}^{\text{offset}}$ is a PRB offset defined for a first PUCCH resource set, the $N_{\text{CS}}$ is a total number of initial cyclic shift indexes in an initial cyclic shift index set defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, when the second symbol set comprises the at least one first-type symbol, the minimum PRB index of the second signal is determined to be

$$N_{\text{BWP}}^{\text{size}} - RB_{\text{BWP}}^{\text{offset}} \cdot N_{RB} - (N_{\text{BWP}}^{\text{end}} - V2) - (1 + \lfloor (r_{\text{PUCCH}} - 8)/N_{\text{CS}} \rfloor) \cdot N_{RB}$$ ; the $V2$ is the value provided by the second parameter, the $r_{\text{PUCCH}}$ depends on an index of a first CCE of a PDCCH used for receiving the first signaling, the $N_{\text{BWP}}^{\text{size}}$ is a size of an initial UL BWP, the $N_{\text{BWP}}^{\text{end}}$ is an index of an ending common resource block of the initial UL BWP (relative to common resource block 0); and the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, the second parameter is a parameter indicating an index of an end common resource block of a configured frequency band (relative to common resource block 0).

As one embodiment, when the second symbol set does not comprise the first-type symbol, a minimum PRB index of the second signal does not depend on the second parameter.

As one embodiment, when the second symbol set does not comprise the first-type symbol, a minimum PRB index of the second signal is determined as $$N_{\text{BWP}}^{\text{size}} - RB_{\text{BWP}}^{\text{offset}} \cdot N_{RB} - (1 + \lfloor (r_{\text{PUCCH}} - 8)/N_{\text{CS}} \rfloor) \cdot N_{RB}$$ ; the $r_{\text{PUCCH}}$ depends on an index of the first CCE of PDCCH used for receiving the first signaling, the $N_{\text{BWP}}^{\text{size}}$ is a size of an initial UL BWP; and the $RB_{\text{BWP}}^{\text{offset}}$ is for PRB offset defined for the first PUCCH resource set, the $N_{\text{CS}}$ is a total number of initial cyclic shift indexes in an initial cyclic shift index set defined for the first PUCCH resource set, the $N_{RB}$ is a number of PRBs used for each PUCCH resource in the first PUCCH resource set or is equal to 1, and the first PUCCH resource set is indicated by RRC signaling.

## Embodiment 8

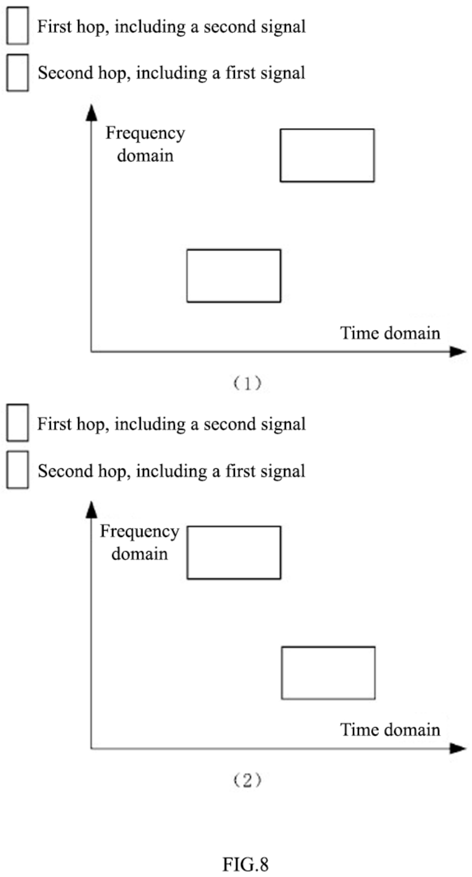

Embodiment 8 shows an illustration schematic diagram of signal transmission on a first PUCCH according to one embodiment of the present application, as shown in FIG. 8. FIG. 8 comprises two different cases, comprising case (1) and case (2); in case (1), signal transmission on the first PUCCH uses frequency hopping, signals transmitted on the first PUCCH comprise a first signal and a second signal, the first signal is in a second hop (represented by a gray filled box), and the second signal is in a first hop (represented by a blank box); and in case (2), signal transmission on the first PUCCH uses frequency hopping, signals transmitted on the first PUCCH comprise a first signal and a second signal, the first signal is in a first hop (represented by a gray filled box), and the second signal is in a second hop (represented by a blank box).

In case (1) in Embodiment 8, the minimum PRB index of the first signal is related to $r_{\text{PUCCH}}$, the $r_{\text{PUCCH}}$ depends on an index of a first CCE of a PDCCH used for receiving the first signaling, and $\lfloor r_{\text{PUCCH}}/8 \rfloor = 0$.

In case (2) in Embodiment 8, the minimum PRB index of the first signal is related to $r_{\text{PUCCH}}$, the $r_{\text{PUCCH}}$ depends on an index of a first CCE of a PDCCH used for receiving the first signaling, and $\lfloor r_{\text{PUCCH}}/8 \rfloor = 1$.

As one sub-embodiment of case (1) in Embodiment 8, a signal transmitted in the first hop comprises a DMRS (Demodulation reference signal), and a signal transmitted in the second hop comprises a DMRS.

As one sub-embodiment of case (1) in Embodiment 8, a signal transmitted in the first hop only comprises the second signal, and a signal transmitted in the second hop only comprises the first signal.

As one sub-embodiment of case (2) in Embodiment 8, a signal transmitted in the first hop comprises a DMRS, and a signal transmitted in the second hop comprises a DMRS.

As one sub-embodiment of case (2) in Embodiment 8, a signal transmitted in the second hop only comprises the second signal, and a signal transmitted in the first hop only comprises the first signal.

As one embodiment, the first hop and the second hop are continuous in the time domain.

As one embodiment, the first hop and the second hop are in the same slot.

As one embodiment, only when the first symbol set comprises the at least one first-type symbol, the first parameter is used for determining the minimum PRB index of the first signal; and the first parameter is configurable.

As one embodiment, when the first symbol set comprises the at least one first-type symbol, the minimum PRB index of the first signal is determined to be $N_{\text{BWP}}^{\text{size}} - RB_{\text{BWP}}^{\text{offset}} \cdot N_{RB} - V1 - (1 + \lfloor (r_{\text{PUCCH}} - 8)/N_{\text{CS}} \rfloor) \cdot N_{RB}$; the $V1$ is a value provided by the first parameter, the $r_{\text{PUCCH}}$ depends on an index of a first CCE of a PDCCH used for receiving the first signaling, and the $N_{\text{BWP}}^{\text{size}}$ is a size of an initial UL BWP; and the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, a benefit of the above method comprises: improving adaptability between the resources occupied by the PUCCH transmission when dedicated PUCCH resources are not configured and the symbol type.

As one embodiment, when the first symbol set comprises the at least one first-type symbol, the minimum PRB index of the first signal is determined to be $N_{\text{BWP}}^{\text{size}} - RB_{\text{BWP}}^{\text{offset}} \cdot N_{RB} - V1 \cdot N_{RB} - (1 + \lfloor (r_{\text{PUCCH}} - 8)/N_{\text{CS}} \rfloor) \cdot N_{RB}$; the $V1$ is a value provided by the first parameter, the $r_{\text{PUCCH}}$ depends on an index of a first CCE of the PDCCH used for receiving the first signaling, and the $N_{\text{BWP}}^{\text{size}}$ is a size of an initial UL BWP; and the $RB_{\text{BWP}}^{\text{offset}}$ is a PRB offset defined for a first PUCCH resource set, the $N_{\text{CS}}$ is a total number of initial cyclic shift indexes in an initial cyclic shift index set defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, a benefit of the above method comprises: improving adaptability between the resources occupied by the PUCCH transmission when dedicated PUCCH resources are not configured and the symbol type.

As one embodiment, when the first symbol set comprises the at least one first-type symbol, the minimum PRB index is determined to be $N_{\text{BWP}}^{\text{size}} - RB_{\text{BWP}}^{\text{offset}} \cdot N_{RB} - (N_{\text{BWP}}^{\text{end}} - V1) - (1 + \lfloor (r_{\text{PUCCH}} - 8)/N_{\text{CS}} \rfloor) \cdot N_{RB}$; the $V1$ is a value provided by the first parameter, the $r_{\text{PUCCH}}$ depends on an index of a first CCE of a PDCCH used for receiving the first signaling, the $N_{\text{BWP}}^{\text{size}}$ is a size of an initial UL BWP, the $N_{\text{BWP}}^{\text{end}}$ is an index of an ending common resource block of the initial UL BWP (relative to common resource block 0); and the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, a benefit of the above method comprises: improving adaptability between the resources occupied by the PUCCH transmission when dedicated PUCCH resources are not configured and the symbol type.

As one embodiment, the first parameter is a parameter indicating an index of an end common resource block of a configured frequency band (relative to common resource block 0).

As one embodiment, the first value in the present application is the $V1$.

As one embodiment, the first value in the present application is the $V1 \cdot N_{RB}$.

As one embodiment, the first value in the present application is $N_{\text{BWP}}^{\text{end}} - V1$.

As one embodiment, the second value in the present application is $(1 + \lfloor(r_{\text{PUCCH}}-8)/N_{\text{CS}}\rfloor) \cdot N_{RB}$.

As one embodiment, the first PUCCH resource set is a PUCCH resource set indicated by RRC signaling from a plurality of PUCCH resource sets, and the plurality of PUCCH resource sets are all pre-defined or configurable.

As one embodiment, for one PUCCH resource set of the plurality of PUCCH resource sets: a value of the defined PRB offset is predefined and is one of 0, 2, 3, 4, or is $\lfloor N_{\text{BWP}}^{\text{size}}/4 \rfloor$, wherein the $N_{\text{BWP}}^{\text{size}}$ is a size of an initial UL BWP.

As one embodiment, for one PUCCH resource set among the plurality of PUCCH resource sets, the defined PUCCH format is pre-defined and is one of PUCCH format 0 or PUCCH format 1.

As one embodiment, for one PUCCH resource set among the plurality of PUCCH resource sets, the defined initial cyclic shift index set is pre-defined and comprises multiple initial cyclic shift indexes.

As one embodiment, one initial cyclic shift index set is {0,3}.

As one embodiment, one initial cyclic shift index set is {0,4,8}.

As one embodiment, one initial cyclic shift index set is {0,6}.

As one embodiment, one initial cyclic shift index set is {0,3,6.9}.

As one embodiment, the first signaling is one DCI format; the $r_{\text{PUCCH}} = \left\lfloor \dfrac{2 \cdot n_{\text{CCE},0}}{N_{\text{CCE}}} \right\rfloor + 2 \cdot \Delta_{\text{PRI}}$, wherein the $N_{\text{CCE}}$ is the number of CCEs in a CORESET received for one PDCCH occupied by the first signaling, the $n_{\text{CCE},0}$ is an index of the first CCE received for the one PDCCH, and the $\Delta_{\text{PRI}}$ is a value of a PUCCH resource indicator field in the first signaling.

As one embodiment, the $r_{\text{PUCCH}}$ is an index of a PUCCH resource used for signal transmission on the first PUCCH.

As one embodiment, the first parameter is an RRC layer parameter.

As one embodiment, the first parameter is configured by an SIB.

As one embodiment, the first parameter is configured by an SIB1.

As one embodiment, the first parameter is configured by an SIB other than an SIB1.

As one embodiment, the first parameter is a parameter configured to a user supporting a full-duplex mode.

As one embodiment, when the first symbol set does not comprise the first-type symbol, the minimum PRB index of the first signal does not depend on the first parameter.

As one embodiment, when the first symbol set does not comprise the first-type symbol, a minimum PRB index of the first signal is determined as $N_{\text{BWP}}^{\text{size}} - RB_{\text{BWP}}^{\text{offset}} \cdot N_{RB} - (1 + \lfloor(r_{\text{PUCCH}}-8)/N_{\text{CS}}\rfloor) \cdot N_{RB}$; the $r_{\text{PUCCH}}$ depends on an index of a first CCE of the PDCCH used for receiving the first signaling; the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, whether a second parameter is used for determining the minimum PRB index of the second signal depends on whether the first symbol set comprises the first-type symbol; when the first symbol set comprises the first-type symbol, the second parameter is used for determining the minimum PRB index of the second signal; and the second parameter is configurable.

As one embodiment, when the first symbol set comprises the at least one first-type symbol, the minimum PRB index of the second signal is determined to be $RB_{\text{BWP}}^{\text{offset}} \cdot N_{RB} + V2 + \lfloor r_{\text{PUCCH}}/N_{\text{CS}}\rfloor \cdot N_{RB}$; the $V2$ is a value provided by the second parameter, and the $r_{\text{PUCCH}}$ depends on an index of a first CCE of a PDCCH used for receiving the first signaling; and the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, when the first symbol set comprises the at least one first-type symbol, the minimum PRB index of the second signal is determined to be $RB_{\text{BWP}}^{\text{offset}} \cdot N_{RB} + V2 \cdot N_{RB} + \lfloor r_{\text{PUCCH}}/N_{\text{CS}}\rfloor \cdot N_{RB}$; the $V2$ is a value provided by the second parameter, and the $r_{\text{PUCCH}}$ depends on an index of a first CCE of a PDCCH used for receiving the first signaling; and the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, when the first symbol set comprises the at least one first-type symbol, the minimum PRB index of the first signal is determined to be $RB_{\text{BWP}}^{\text{offset}} \cdot N_{RB} + (V1 - N_{\text{BWP}}^{\text{start}}) + \lfloor r_{\text{PUCCH}}/N_{\text{CS}} \rfloor \cdot N_{RB}$ the V1 is a value provided by the second parameter, the $r_{\text{PUCCH}}$ depends on an index of a first CCE of a PDCCH used for receiving the first signaling, the $N_{\text{BWP}}^{\text{start}}$; is an index of a starting common resource block (common resource block) of an initial UL BWP (relative to common resource block 0); and the $RB_{\text{BWP}}^{\text{offset}}$ is a PRB offset defined for a first PUCCH resource set, and the $N_{\text{CS}}$ is an initial cyclic shift indexes in the initial cyclic shift index set defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, the second parameter is a parameter indicating an index of a starting common resource block of a configured frequency band (relative to common resource block 0).

As one embodiment, the second parameter is an RRC layer parameter.

As one embodiment, the second parameter is configured by an SIB.

As one embodiment, the second parameter is configured by an SIB1.

As one embodiment, the second parameter is configured by an SIB other than an SIB1.

As one embodiment, the second parameter is a parameter configured to a user supporting a full-duplex mode.

As one embodiment, the second parameter is not the first parameter, and the first parameter and the second parameter are respectively configured.

As one embodiment, the first parameter is configured for a first hop in frequency hopping, and the second parameter is configured for a second hop in frequency hopping.

As one embodiment, a benefit of the above method comprises: improving configuration flexibility.

As one embodiment, the second parameter is the first parameter, and the V2 is the V1.

As one embodiment, a benefit of the above method comprises: reducing the overhead of configuration signaling.

As one embodiment, when the first symbol set does not comprise the first-type symbol, a minimum PRB index of the second signal does not depend on the second parameter.

As one embodiment, when the first symbol set does not comprise the first-type symbol, the minimum PRB index of the second signal is determined to be $RB_{\text{BWP}}^{\text{offset}} \cdot N_{RB} + \lfloor r_{\text{PUCCH}}/N_{\text{CS}} \rfloor \cdot N_{RB}$; the $r_{\text{PUCCH}}$ depends on an index of a first CCE of a PDCCH used for receiving the first signaling; the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, the first symbol set does not comprise symbols occupied by the second signal in a time domain, and a minimum PRB index of the second signal does not depend on whether the first symbol set comprises the first-type symbol.

As one embodiment, the minimum PRB index of the second signal depends on whether a second symbol set comprises the first-type symbol, and the second symbol set is composed of symbols occupied by the second signal in the time domain.

As one embodiment, whether a second parameter is used for determining the minimum PRB index of the second signal depends on whether a second symbol set comprises the first-type symbol, and the second symbol set is composed of symbols occupied by the second signal in the time domain; when the second symbol set comprises the first-type symbol, the second parameter is used for determining the minimum PRB index of the second signal; and the second parameter is configurable.

As one embodiment, when the second symbol set comprises the at least one first-type symbol, the minimum PRB index of the second signal is determined to be $RB_{\text{BWP}}^{\text{offset}} \cdot N_{RB} + V2 + \lfloor r_{\text{PUCCH}}/N_{\text{CS}} \rfloor \cdot N_{RB}$; the V2 is a value provided by the second parameter, and the $r_{\text{PUCCH}}$ depends on an index of a first CCE of a PDCCH used for receiving the first signaling; and the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, when the second symbol set comprises the at least one first-type symbol, the minimum PRB index of the second signal is determined to be $RB_{\text{BWP}}^{\text{offset}} \cdot N_{RB} + V2 \cdot N_{RB} + \lfloor r_{\text{PUCCH}}/N_{\text{CS}} \rfloor \cdot N_{RB}$; the V2 is a value provided by the second parameter, and the $r_{\text{PUCCH}}$ depends on an index of a first CCE of a PDCCH used for receiving the first signaling; and the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, when the second symbol set comprises the at least one first-type symbol, the minimum PRB index of the first signal is determined to be $RB_{\text{BWP}}^{\text{offset}} \cdot N_{RB} + (V1 - N_{\text{BWP}}^{\text{start}}) + \lfloor r_{\text{PUCCH}}/N_{\text{CS}} \rfloor \cdot N_{RB}$; the $V1$ is a value provided by the second parameter, the $r_{\text{PUCCH}}$ depends on an index of a first CCE of a PDCCH used for receiving the first signaling, the $N_{\text{BWP}}^{\text{start}}$ is an index of a starting common resource block (common resource block) of an initial UL BWP (relative to common resource block 0); and the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

As one embodiment, the second parameter is a parameter indicating an index of a starting common resource block of a configured frequency band (relative to common resource block 0).

As one embodiment, when the second symbol set does not comprise the first-type symbol, a minimum PRB index of the second signal does not depend on the second parameter.

As one embodiment, when the second symbol set does not comprise the first-type symbol, the minimum PRB index of the second signal is determined to be $RB_{\text{BWP}}^{\text{offset}} \cdot N_{RB} + \lfloor r_{\text{PUCCH}}/N_{\text{CS}} \rfloor \cdot N_{RB}$; the $r_{\text{PUCCH}}$ depends on an index of a first CCE of a PDCCH used for receiving the first signaling; and the $RB_{\text{BWP}}^{\text{offset}}$ is a PRB offset defined for a first PUCCH resource set, the $N_{\text{CS}}$ is a total number of initial cyclic shift indexes in a set of initial cyclic shift indexes defined for the first PUCCH resource set, the $N_{RB}$ is a number of PRBs for each PUCCH resource in the first PUCCH resource set or is equal to 1, and the first PUCCH resource set is indicated by RRC signaling.

## Embodiment 9

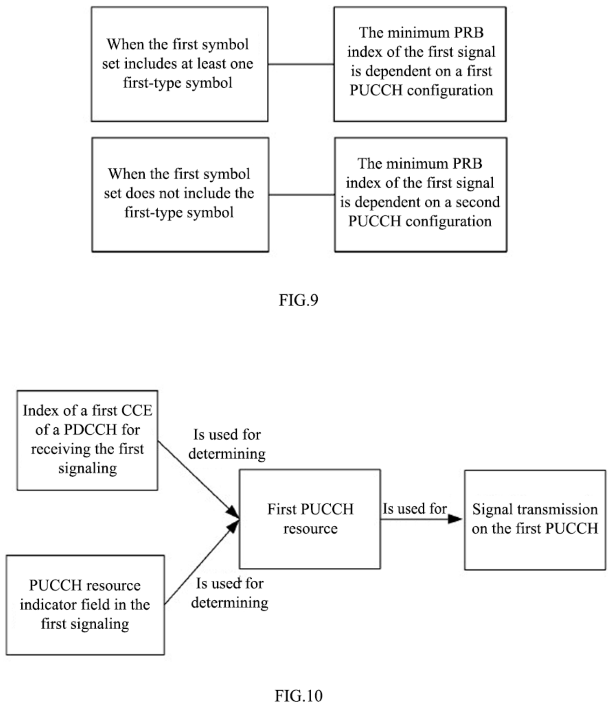

Embodiment 9 shows an illustration schematic diagram of whether a minimum PRB index of a first signal depends on whether a first symbol set comprises a first-type symbol according to one embodiment of the present application, as shown in FIG. 9.

In Embodiment 9, a first PUCCH configuration and a second PUCCH configuration are respectively configured for the first node; when the first symbol set comprises the at least one first-type symbol, the minimum PRB index of the first signal depends on the first PUCCH configuration; and when the first symbol set does not comprise the first-type symbol, the minimum PRB index of the first signal depends on the second PUCCH configuration.

As one embodiment, the stated minimum PRB index in the present application refers to the index of the starting PRB.

As one embodiment, the stated minimum PRB index in the present application refers to the index of the first PRB.

As one embodiment, the first PUCCH configuration is configured by RRC signaling.

As one embodiment, the second PUCCH configuration is configured by RRC signaling.

As one embodiment, the first PUCCH configuration comprises UE-specific PUCCH parameters.

As one embodiment, the second PUCCH configuration comprises UE-specific PUCCH parameters.

As one embodiment, the first PUCCH configuration comprises parameters for PUCCH transmission.

As one embodiment, the second PUCCH configuration comprises parameters for PUCCH transmission.

As one embodiment, the first PUCCH configuration comprises configuration of dedicated PUCCH resource(s).

As one embodiment, the second PUCCH configuration comprises configuration of dedicated PUCCH resource(s).

As one embodiment, the first PUCCH configuration comprises one PUCCH-Config.

As one embodiment, the second PUCCH configuration comprises one PUCCH-Config.

As one embodiment, the first PUCCH configuration comprises a configuration of at least one PUCCH resource set.

As one embodiment, the second PUCCH configuration comprises a configuration of at least one PUCCH resource set.

As one embodiment, a configuration of each PUCCH resource in the first PUCCH configuration comprises an index of a first PRB.

As one embodiment, a configuration of each PUCCH resource in the second PUCCH configuration comprises an index of a first PRB.

As one embodiment, the first PUCCH configuration and the second PUCCH configuration are respectively configured for PUCCH transmission on different symbol types.

As one embodiment, a benefit of the above method comprises: improving the flexibility of the PUCCH configuration and the transmission performance of the PUCCH.

As one embodiment, when the first symbol set comprises the at least one first-type symbol, one PUCCH resource configured in the first PUCCH configuration is used for signal transmission on the first PUCCH, and the minimum PRB index of the first signal is a first PRB index corresponding to the one PUCCH resource configured in the first PUCCH configuration; and when the first symbol set does not comprise the first-type symbol, one PUCCH resource configured in the second PUCCH configuration is used for signal transmission on the first PUCCH, and the minimum PRB index of the first signal is a first PRB index corresponding to the one PUCCH resource configured in the second PUCCH configuration.

As one embodiment, a first PUCCH configuration and a second PUCCH configuration are configured for the first node respectively; the expression of "the minimum PRB index of the first signal depends on the first signaling, and whether the first symbol set comprises the first-type symbol" means: the index of the first PRB of the PUCCH resource used for signal transmission on the first PUCCH depends on the first signaling, and whether the first symbol set comprises the first-type symbol; when the first symbol set comprises the at least one first-type symbol, one PUCCH resource configured in the first PUCCH configuration is used for signal transmission on the first PUCCH; and when the first symbol set does not comprise the first-type symbol, one PUCCH resource configured in the second PUCCH configuration is used for signal transmission on the first PUCCH.

As one embodiment, a benefit of the above method comprises: improving adaptability between the resources occupied by the PUCCH transmission when the dedicated PUCCH resource is configured and the symbol type.

As one embodiment, the expression of "the first PRB" in the present application refers to: the first PRB prior to frequency hopping or when there is no frequency hopping.

As one embodiment, the first signal comprises and only comprises all of signals transmitted on the first PUCCH.

As one embodiment, the first PUCCH configuration comprises configurations of T1 PUCCH resource sets, the second PUCCH configuration comprises configurations of T2 PUCCH resource sets, and the T1 and T2 are both configurable positive integers.

As one embodiment, the T1 is not greater than 4.

As one embodiment, the first PUCCH configuration comprises a parameter indicating the T1.

As one embodiment, the T2 is not greater than 4.

As one embodiment, the second PUCCH configuration comprises a parameter indicating the T2.

As one embodiment, each PUCCH resource set in the T1 PUCCH resource set comprises a plurality of PUCCH resources.

As one embodiment, each PUCCH resource set in the T2 PUCCH resource set comprises a plurality of PUCCH resources.

As one embodiment, the T1 is greater than 1; and when the first symbol set comprises the at least one first-type symbol, a first PUCCH resource set is determined from the T1 PUCCH resource sets according to the number of bits of UCI to be transmitted on the first PUCCH and a predefined or configured mapping relationship between the number of bits of UCI and the T1 PUCCH resource sets, the first signaling being used for indicating a PUCCH resource for signal transmission on the first PUCCH from the first PUCCH resource set.

As one embodiment, the T1 is equal to 1; and when the first symbol set comprises the at least one first-type symbol, the first signaling is used for indicating a PUCCH resource for signal transmission on the first PUCCH from the T1 PUCCH resource sets.

As one embodiment, the T2 is greater than 1; and when the first symbol set does not comprise the first-type symbol, a first PUCCH resource set is determined from the T2 PUCCH resource sets according to the number of bits of UCI to be transmitted on the first PUCCH and according to a predefined or configured mapping relationship between the number of bits of UCI and the T2 PUCCH resource sets, and the first signaling is used for indicating a PUCCH resource for signal transmission on the first PUCCH from the first PUCCH resource set.

As one embodiment, the T2 is equal to 1; and when the first symbol set does not comprise the first-type symbol, the first signaling is used for indicating a PUCCH resource for signal transmission on the first PUCCH from the T2 PUCCH resource sets.

## Embodiment 10

Embodiment 10 shows a schematic diagram of relationships among first signaling, a first PUCCH resource, and a first PUCCH according to one embodiment of the present application, as shown in FIG. 10.

In Embodiment 10, the first PUCCH resource is used for signal transmission on the first PUCCH, and an index of a first CCE of a PDCCH for receiving the first signaling and a PUCCH resource indicator field in the first signaling are both used for determining the first PUCCH resource.

As one embodiment, from the perspective of the time domain, the first PUCCH resource occupies a plurality of continuous symbols in the slot.

As one embodiment, the first PUCCH resource occupies at least one PRB in the frequency domain.

As one embodiment, a PUCCH format corresponding to the first PUCCH resource is PUCCH format 0 or PUCCH format 1.

As one embodiment, the first PUCCH resource has one initial cyclic shift index.

As one embodiment, a first PUCCH resource set is a PUCCH resource set indicated by RRC signaling from a plurality of PUCCH resource sets, and the plurality of PUCCH resource sets are all predefined or configurable; and the first PUCCH resource is one of the first PUCCH resource sets.

As one embodiment, one PUCCH resource set of the plurality of PUCCH resource sets comprises a plurality of PUCCH resources.

As one embodiment, each PUCCH resource set of the plurality of PUCCH resource sets comprises 16 PUCCH resources.

As one embodiment, the number of PUCCH resources comprised in one PUCCH resource set of the plurality of PUCCH resource sets is configurable.

As one embodiment, one PUCCH resource is a resource for PUCCH transmission.

As one embodiment, one PUCCH resource comprises at least one of a time domain resource, a frequency domain resource, and an initial cyclic shift for PUCCH transmission.

As one embodiment, for one PUCCH resource set in the plurality of PUCCH resource sets, any 2 PUCCH resources comprised occupy the same symbols in the time domain.

As one embodiment, for one PUCCH resource set in the plurality of PUCCH resource sets, any 2 PUCCH resources correspond to the same PUCCH format.

As one embodiment, from the perspective of the time domain, the symbols occupied by the first PUCCH resource are symbols used for the signal transmission on the first PUCCH.

As one embodiment, the number of PRBs occupied by the first PUCCH in the frequency domain is 2 times the number of PRBs occupied by the first signal in the frequency domain.

As one embodiment, the first signaling is one DCI format; the $r_{\mathrm{PUCCH}} = \left\lfloor \frac{2 \cdot n_{\mathrm{CCE},0}}{N_{\mathrm{CCE}}} \right\rfloor + 2 \cdot \Delta_{\mathrm{PRI}}$ ; wherein the $N_{\mathrm{CCE}}$ is the number of CCEs in a CORESET received for the PDCCH occupied by the first signaling, the $n_{\mathrm{CCE},0}$ is an index of a first CCE received for the PDCCH, and the $\Delta_{\mathrm{PRI}}$ is a value of a PUCCH resource indicator field in the first signaling; and the $r_{\mathrm{PUCCH}}$ is an index of the first PUCCH resource.

As one embodiment, the first signaling is one DCI format; a first PUCCH resource set is determined from a plurality of PUCCH resource sets configured by RRC signaling according to the number of bits of UCI to be transmitted on the first PUCCH and in accordance with a mapping relationship between a predefined or configured number of bits of UCI and PUCCH resource sets, and the number of PUCCH resources comprised in the first PUCCH resource set is greater than 8; the first PUCCH resource is one of the first PUCCH resource set and an index $r_{\mathrm{PUCCH}}$ of the first PUCCH resource satisfies:

$$
r_{\mathrm{PUCCH}} = \begin{cases} \left\lfloor \frac{n_{\mathrm{CCE},p} \cdot \lceil R_{\mathrm{PUCCH}}/8 \rceil}{N_{\mathrm{CCE},p}} \right\rfloor + \Delta_{\mathrm{PRI}} \cdot \left\lceil \frac{R_{\mathrm{PUCCH}}}{8} \right\rceil & \text{if} \quad \Delta_{\mathrm{PRI}} < R_{\mathrm{PUCCH}} \bmod 8 \\ \left\lfloor \frac{n_{\mathrm{CCE},p} \cdot \lfloor R_{\mathrm{PUCCH}}/8 \rfloor}{N_{\mathrm{CCE},p}} \right\rfloor + \Delta_{\mathrm{PRI}} \cdot \left\lfloor \frac{R_{\mathrm{PUCCH}}}{8} \right\rfloor + R_{\mathrm{PUCCH}} \bmod 8 & \text{if} \quad \Delta_{\mathrm{PRI}} \geq R_{\mathrm{PUCCH}} \bmod 8 \end{cases},
$$

wherein the $N_{\mathrm{CCE},p}$ is the number of CCEs in a CORESET received for the PDCCH occupied by the first signaling, the $n_{\mathrm{CCE},p}$ is an index of a first CCE for the PDCCH reception, the $\Delta_{\mathrm{PRI}}$ is a value of a PUCCH resource indicator field in the first signaling, and the $R_{\mathrm{PUCCH}}$ is the number of PUCCH resources comprised in the first PUCCH resource set.

As one embodiment, the first signaling is one DCI format; a first PUCCH resource set is determined from a plurality of PUCCH resource sets configured by RRC signaling according to the number of bits of UCI to be transmitted on the first PUCCH and in accordance with a mapping relationship between a predefined or configured number of bits of UCI and PUCCH resource sets and when the number of PUCCH resources comprised in the first PUCCH resource set is not greater than 8, a PUCCH resource indicator field in the first signaling indicates the first PUCCH resource from the first PUCCH resource set.

**Embodiment 11**

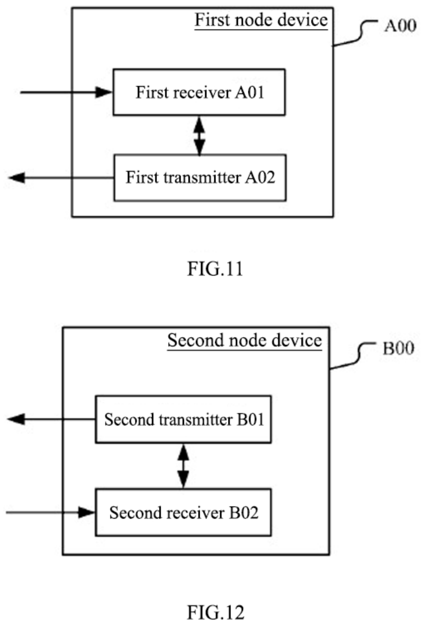

Embodiment 11 illustrates a structural block diagram of a processing device in a first node device, as shown in FIG. 11. In FIG. 11, a processing device A00 in the first node device comprises a first receiver A01 and a first transmitter A02.

As one embodiment, the first node device A00 is user equipment.

As one embodiment, the first node device A00 is a relay node.

As one embodiment, the first node device A00 is a vehicle-mounted communication device.

As one embodiment, the first node device A00 is conventional user equipment.

As one embodiment, the first node device A00 is UE supporting an associated configuration of full-duplex operations.

As one embodiment, the first receiver A01 comprises at least one of an antenna 452, a receiving device 454, a multi-antenna receiving processor 458, a receiving processor 456, a controller/processor 459, a memory 460, and a data source 467 in FIG. 4 of the present application.

As one embodiment, the first receiver A01 comprises at least the first five of an antenna 452, a receiving device 454, a multi-antenna receiving processor 458, a receiving processor 456, a controller/processor 459, a memory 460, and a data source 467 in FIG. 4 of the present application.

As one embodiment, the first receiver A01 comprises at least the first four of an antenna 452, a receiving device 454, a multi-antenna receiving processor 458, a receiving processor 456, a controller/processor 459, a memory 460, and a data source 467 in FIG. 4 of the present application.

As one embodiment, the first receiver A01 comprises at least the first three of an antenna 452, a receiving device 454, a multi-antenna receiving processor 458, a receiving processor 456, a controller/processor 459, a memory 460, and a data source 467 in FIG. 4 of the present application.

As one embodiment, the first receiver A01 comprises at least the first two of an antenna 452, a receiving device 454, a multi-antenna receiving processor 458, a receiving processor 456, a controller/processor 459, a memory 460, and a data source 467 in FIG. 4 of the present application.

As one embodiment, the first transmitter A02 comprises at least one of an antenna 452, a transmitting device 454, a multi-antenna transmitting device processor 457, a transmitting processor 468, a controller/processor 459, a memory 460, and a data source 467 in FIG. 4 of the present application.

As one embodiment, the first transmitter A02 comprises at least the first five of an antenna 452, a transmitting device 454, a multi-antenna transmitting device processor 457, a transmitting processor 468, a controller/processor 459, a memory 460, and a data source 467 in FIG. 4 of the present application.

As one embodiment, the first transmitter A02 comprises at least the first four of an antenna 452, a transmitting device 454, a multi-antenna transmitting device processor 457, a transmitting processor 468, a controller/processor 459, a memory 460, and a data source 467 in FIG. 4 of the present application.

As one embodiment, the first transmitter A02 comprises at least the first three of an antenna 452, a transmitting device 454, a multi-antenna transmitting device processor 457, a transmitting processor 468, a controller/processor 459, a memory 460, and a data source 467 in FIG. 4 of the present application.

As one embodiment, the first transmitter A02 comprises at least the first two of an antenna 452, a transmitting device 454, a multi-antenna transmitting device processor 457, a transmitting processor 468, a controller/processor 459, a memory 460, and a data source 467 in FIG. 4 of the present application.

As one embodiment, the first receiver A01 receives first RRC signaling and a first information block, wherein at least one symbol is indicated by the first RRC signaling as a downlink symbol, and the first receiver A01 receives first signaling; and the first transmitter A02 transmits at least a first signal on a first PUCCH, wherein a first symbol set comprises symbols occupied by the first signal in a time domain; wherein a minimum PRB index of the first signal depends on the first signaling and whether the first symbol set comprises a first-type symbol, and whether at least one symbol indicated by the first RRC signaling as a downlink symbol is the first-type symbol depends on the first information block.

As one embodiment, whether a first parameter is used for determining the minimum PRB index of the first signal depends on whether the first symbol set comprises the first-type symbol; when the first symbol set comprises the at least one first-type symbol, the first parameter is used for determining the minimum PRB index of the first signal; and the first parameter is configurable.

As one embodiment, signal transmission on the first PUCCH adopts frequency hopping, and the first signal is in a first hop; and when the first symbol set comprises at least one first-type symbol, the minimum PRB index of the first signal is determined to be a result of a linear combination of a plurality of values, wherein the plurality of values comprise a first value and a second value, the first value depends on the first parameter, and the second value depends on an index of a first CCE of a PDCCH used for receiving the first signaling.

As one embodiment, an index of a first CCE of a PDCCH used for receiving the first signaling and a PUCCH resource indicator field in the first signaling are both used for determining PUCCH resources for signal transmission on the first PUCCH.

As one embodiment, a symbol configured by the first information block as available for uplink transmission and indicated by the first RRC signaling as a downlink symbol belongs to the first-type symbol.

As one embodiment, the first RRC signaling is tdd-UL-DL-ConfigurationCommon.

As one embodiment, the number of PRBs occupied by the first signal depends on whether the first symbol set comprises the first-type symbol.

As one embodiment, the first receiver A01 receives a first PDSCH, the first signaling is used for scheduling the first PDSCH, and the first signal is used for transmitting HARQ-ACK information for the first PDSCH.

As one embodiment, the meaning of receiving/transmitting the first PDSCH comprises: receiving/transmitting a signal on the first PDSCH.

### Embodiment 12

Embodiment 12 illustrates a structural block diagram of a processing device in a second node device, as shown in FIG. 12. In FIG. 12, a processing device B00 in the second node device comprises a second transmitter B01 and a second receiver B02.

As one embodiment, the second node device B00 is a base station.

As one embodiment, the second node device B00 is a satellite device.

As one embodiment, the second node device B00 is a relay node.

As one embodiment, the second node device B00 is a base station supporting full-duplex operations.

As one embodiment, the second node device B00 is a base station supporting only half-duplex operations.

As one embodiment, the second node device B00 is one of a test apparatus, a test device, and a test instrument.

As one embodiment, the second transmitter B01 comprises at least one of an antenna 420, a transmitting device 418, a multi-antenna transmitting processor 471, a transmitting processor 416, a controller/processor 475, and a memory 476 in FIG. 4 of the present application.

As one embodiment, the second transmitter B01 comprises at least the first five of an antenna 420, a transmitting device 418, a multi-antenna transmitting processor 471, a transmitting processor 416, a controller/processor 475, and a memory 476 in FIG. 4 of the present application.

As one embodiment, the second transmitter B01 comprises at least the first four of an antenna 420, a transmitting device 418, a multi-antenna transmitting processor 471, a transmitting processor 416, a controller/processor 475, and a memory 476 in FIG. 4 of the present application.

As one embodiment, the second transmitter B01 comprises at least the first three of an antenna 420, a transmitting device 418, a multi-antenna transmitting processor 471, a transmitting processor 416, a controller/processor 475, and a memory 476 in FIG. 4 of the present application.

As one embodiment, the second transmitter B01 comprises at least the first two of an antenna 420, a transmitting device 418, a multi-antenna transmitting processor 471, a transmitting processor 416, a controller/processor 475, and a memory 476 in FIG. 4 of the present application.

As one embodiment, the second receiver B02 comprises at least one of an antenna 420, a receiving device 418, a multi-antenna receiving processor 472, a receiving processor 470, a controller/processor 475, and a memory 476 in FIG. 4 of the present application.

As one embodiment, the second receiver B02 comprises at least the first five of an antenna 420, a receiving device 418, a multi-antenna receiving processor 472, a receiving processor 470, a controller/processor 475, and a memory 476 in FIG. 4 of the present application.

As one embodiment, the second receiver B02 comprises at least the first four of an antenna 420, a receiving device 418, a multi-antenna receiving processor 472, a receiving processor 470, a controller/processor 475, and a memory 476 in FIG. 4 of the present application.

As one embodiment, the second receiver B02 comprises at least the first three of an antenna 420, a receiving device 418, a multi-antenna receiving processor 472, a receiving processor 470, a controller/processor 475, and a memory 476 in FIG. 4 of the present application.

As one embodiment, the second receiver B02 comprises at least the first two of an antenna 420, a receiving device 418, a multi-antenna receiving processor 472, a receiving processor 470, a controller/processor 475, and a memory 476 in FIG. 4 of the present application.

As one embodiment, the second transmitter B01 transmits first RRC signaling and a first information block, wherein at least one symbol is indicated by the first RRC signaling as a downlink symbol, and the second transmitter B01 transmits first signaling; and the second receiver B02 receives at least a first signal on a first PUCCH, wherein a first symbol set comprises symbols occupied by the first signal in a time domain, wherein a minimum PRB index of the first signal depends on the first signaling and whether the first symbol set comprises a first-type symbol, and whether at least one symbol indicated by the first RRC signaling as a downlink symbol is the first-type symbol depends on the first information block.

As one embodiment, whether a first parameter is used for determining the minimum PRB index of the first signal depends on whether the first symbol set comprises the first-type symbol; when the first symbol set comprises the at least one first-type symbol, the first parameter is used for determining the minimum PRB index of the first signal; and the first parameter is configurable.

As one embodiment, signal transmission on the first PUCCH adopts frequency hopping, and the first signal is in a first hop; and when the first symbol set comprises at least one first-type symbol, the minimum PRB index of the first signal is determined to be a result of a linear combination of a plurality of values, wherein the plurality of values comprise a first value and a second value, the first value depends on the first parameter, and the second value depends on an index of a first CCE of a PDCCH used for receiving the first signaling.

As one embodiment, an index of a first CCE of a PDCCH used for receiving the first signaling and a PUCCH resource indicator field in the first signaling are both used for determining PUCCH resources for signal transmission on the first PUCCH.

As one embodiment, a symbol configured by the first information block as available for uplink transmission and indicated by the first RRC signaling as a downlink symbol belongs to the first-type symbol.

As one embodiment, the first RRC signaling is tdd-UL-DL-ConfigurationCommon.

As one embodiment, the number of PRBs occupied by the first signal depends on whether the first symbol set comprises the first-type symbol.

As one embodiment, the second transmitter B01 transmits a first PDSCH, and the first signaling is used for scheduling the first PDSCH.

Those of ordinary skill in the art can understand that all or parts of the steps in the above method can be completed by instructing relevant hardware through a program, and the program can be stored in a computer-readable storage medium, such as a read-only memory, a hard disk or an optical disk. Optionally, all or parts of the steps in the above embodiments can also be implemented using one or more integrated circuits. Accordingly, each module unit in the above embodiments can be implemented in the form of hardware or in the form of a software function module. The present application is not limited to any specific form of software and hardware combinations. The first node device in the present application comprises but is not limited to mobile phones, tablet computers, notebook computers, network access cards, low-power-consumption devices, eMTC devices, NB-IoT devices, vehicle-mounted communication devices, aircrafts, airplanes, drones, remote-controlled aircrafts and other wireless communication devices. The second node device in the present application comprises but is not limited to mobile phones, tablet computers, notebook computers, network access cards, low-power-consumption devices, eMTC devices, NB-IoT devices, vehicle-mounted communication devices, aircrafts, airplanes, drones, remote-controlled aircrafts and other wireless communication devices. The user equipment or UE or terminal in the present application comprises but is not limited to mobile phones, tablet computers, notebook computers, network access cards, low-power-consumption devices, eMTC devices, NB-IoT devices, vehicle-mounted communication devices, aircrafts, airplanes, drones, remote-controlled aircrafts and other wireless communication devices. The base station device or base station or network-side device in the present application comprises but is not limited to macrocell base stations, microcell base stations, home base stations, relay base stations, eNBs, gNBs, transmission receiving point TRPs, GNSS, relay satellites, satellite base stations, air base stations, test apparatuses, test devices, test instruments and other devices.

Those skilled in the art should understand that the present invention can be implemented in other specified forms without departing from its core or basic features. Therefore, the embodiments disclosed at present should be regarded as descriptive rather than restrictive in any way. The scope of the present invention is determined by the appended claims rather than the foregoing description, and all modifications within their equivalent meanings and areas are considered to be comprised therein.

**Claims**

1. A first node used for wireless communication, comprising:

  a first receiver receiving first RRC signaling and a first information block, wherein at least one symbol is indicated by the first RRC signaling as a downlink symbol;
  the first receiver receiving first signaling; and
  a first transmitter transmitting at least a first signal on a first PUCCH, wherein a first symbol set comprises symbols occupied by the first signal in a time domain;
  wherein a minimum PRB index of the first signal depends on the first signaling, and whether the first symbol set comprises a first-type symbol; and whether the at least one symbol, which is indicated by the first RRC signaling as the downlink symbol, is the first-type symbol depends on the first information block.

2.  The first node according to claim 1, wherein whether a first parameter is used for determining the minimum PRB index of the first signal depends on whether the first symbol set comprises the first-type symbol; when the first symbol set comprises at least one first-type symbol, the first parameter is used for determining the minimum PRB index of the first signal; and the first parameter is configurable.

3.  The first node according to claim 2, wherein signal transmission on the first PUCCH adopts frequency hopping, and the first signal is in a first hop; and when the first symbol set comprises the at least one first-type symbol, the minimum PRB index of the first signal is determined to be a result of a linear combination of a plurality of values, wherein the plurality of values comprises a first value and a second value, the first value depends on the first parameter, and the second value depends on an index of a first CCE of a PDCCH used for receiving the first signaling.

4.  The first node according to any one of claims 1 to 3, wherein the index of the first CCE of the PDCCH for receiving the first signaling and a PUCCH resource indicator field in the first signaling are both used for determining a PUCCH resource for signal transmission on the first PUCCH.

5.  The first node according to any one of claims 1 to 4, wherein a symbol configured by the first information block to be available for uplink transmission and indicated by the first RRC signaling as a downlink symbol belongs to the first-type symbol.

6.  The first node according to any one of claims 1 to 5, wherein the first RRC signaling is tdd-UL-DL-Configuration-Common.

7.  The first node according to any one of claims 1 to 6, wherein a number of PRBs occupied by the first signal depends on whether the first symbol set comprises the first-type symbol.

8.  A second node used for wireless communication, comprising:

    a second transmitter transmitting first RRC signaling and a first information block, wherein at least one symbol is indicated by the first RRC signaling as a downlink symbol;
    the second transmitter transmitting first signaling; and
    a second receiver receiving at least a first signal on a first PUCCH, wherein a first symbol set comprises symbols occupied by the first signal in a time domain;
    wherein a minimum PRB index of the first signal depends on the first signaling, and whether the first symbol set comprises a first-type symbol; and whether the at least one symbol, which is indicated by the first RRC signaling as the downlink symbol, is the first-type symbol depends on the first information block.

9.  The second node according to claim 8, wherein whether a first parameter is used for determining the minimum PRB index of the first signal depends on whether the first symbol set comprises the first-type symbol; when the first symbol set comprises at least one first-type symbol, the first parameter is used for determining the minimum PRB index of the first signal; and the first parameter is configurable.

10. The second node according to claim 9, wherein signal transmission on the first PUCCH adopts frequency hopping, and the first signal is in a first hop; and when the first symbol set comprises the at least one first-type symbol, the minimum PRB index of the first signal is determined to be a result of a linear combination of a plurality of values, wherein the plurality of values comprises a first value and a second value, the first value depends on the first parameter, and the second value depends on an index of a first CCE of a PDCCH used for receiving the first signaling.

11. The second node according to any one of claims 8 to 10, wherein the index of the first CCE of the PDCCH for receiving the first signaling and a PUCCH resource indicator field in the first signaling are both used for determining a PUCCH resource for signal transmission on the first PUCCH.

12. The second node according to any one of claims 8 to 11, wherein a symbol configured by the first information block to be available for uplink transmission and indicated by the first RRC signaling as a downlink symbol belongs to the first-type symbol.

13. The second node according to any one of claims 8 to 12, wherein the first RRC signaling is tdd-UL-DL-ConfigurationCommon.

14. The second node according to any one of claims 8 to 13, wherein a number of PRBs occupied by the first signal depends on whether the first symbol set comprises the first-type symbol.

15. A method used in a first node for wireless communication, comprising:

receiving first RRC signaling and a first information block, wherein at least one symbol is indicated by the first RRC signaling as a downlink symbol;
receiving first signaling; and
transmitting at least a first signal on a first PUCCH, wherein a first symbol set comprises symbols occupied by the first signal in a time domain,
wherein a minimum PRB index of the first signal depends on the first signaling, and whether the first symbol set comprises a first-type symbol; and whether the at least one symbol, which is indicated by the first RRC signaling as the downlink symbol, is the first-type symbol depends on the first information block.

16. The method in a first node according to claim 15, wherein whether a first parameter is used for determining the minimum PRB index of the first signal depends on whether the first symbol set comprises the first-type symbol; when the first symbol set comprises at least one first-type symbol, the first parameter is used for determining the minimum PRB index of the first signal; and the first parameter is configurable.

17. The method in a first node according to claim 16, wherein signal transmission on the first PUCCH adopts frequency hopping, and the first signal is in a first hop; and when the first symbol set comprises the at least one first-type symbol, the minimum PRB index of the first signal is determined to be a result of a linear combination of a plurality of values, wherein the plurality of values comprises a first value and a second value, the first value depends on the first parameter, and the second value depends on an index of a first CCE of a PDCCH used for receiving the first signaling.

18. The method in a first node according to any one of claims 15 to 17, wherein the index of the first CCE of the PDCCH for receiving the first signaling and a PUCCH resource indicator field in the first signaling are both used for determining a PUCCH resource for signal transmission on the first PUCCH.

19. The method in a first node according to any one of claims 15 to 18, wherein a symbol configured by the first information block to be available for uplink transmission and indicated by the first RRC signaling as a downlink symbol belongs to the first-type symbol.

20. The method in a first node according to any one of claims 15 to 19, wherein the first RRC signaling is tdd-UL-DL-ConfigurationCommon.

21. The method in a first node according to any one of claims 15 to 20, wherein a number of PRBs occupied by the first signal depends on whether the first symbol set comprises the first-type symbol.

22. A method used in a second node for wireless communication, comprising:

transmitting first RRC signaling and a first information block, wherein at least one symbol is indicated by the first RRC signaling as a downlink symbol;
transmitting first signaling; and
receiving at least a first signal on a first PUCCH, wherein a first symbol set comprises symbols occupied by the first signal in a time domain;
wherein a minimum PRB index of the first signal depends on the first signaling, and whether the first symbol set comprises a first-type symbol; and whether the at least one symbol, which is indicated by the first RRC signaling as the downlink symbol, is the first-type symbol depends on the first information block.

23. The method in a second node according to claim 22, wherein whether a first parameter is used for determining the minimum PRB index of the first signal depends on whether the first symbol set comprises the first-type symbol; when the first symbol set comprises at least one first-type symbol, the first parameter is used for determining the minimum PRB index of the first signal; and the first parameter is configurable.

24. The method in a second node according to claim 23, wherein signal transmission on the first PUCCH adopts frequency hopping, and the first signal is in a first hop; and when the first symbol set comprises the at least one first-type symbol, the minimum PRB index of the first signal is determined to be a result of a linear combination of a plurality of values, wherein the plurality of values comprises a first value and a second value, the first value depends on the first parameter, and the second value depends on an index of a first CCE of a PDCCH used for receiving the first signaling.

25. The method in a second node according to any one of claims 22 to 24, wherein the index of the first CCE of the PDCCH for receiving the first signaling and a PUCCH resource indicator field in the first signaling are both used for determining a PUCCH resource for signal transmission on the first PUCCH.

26. The method in a second node according to any one of claims 22 to 25, wherein a symbol configured by the first information block to be available for uplink transmission and indicated by the first RRC signaling as a downlink symbol belongs to the first-type symbol.

27. The method in a second node according to any one of claims 22 to 26, wherein the first RRC signaling is tdd-UL-DL-ConfigurationCommon.

28. The method in a second node according to any one of claims 22 to 27, wherein a number of PRBs occupied by the first signal depends on whether the first symbol set comprises the first-type symbol.

100

First node

Receive first RRC signaling
and a first information block —101

Receive first signaling —102

Send at least a first signal
on a first PUCCH —103

FIG. 1

EPS 200

220
HSS

NR-RAN
202

211
MME/AMF/
UPF

214
Other
MME/AMF/UPF

201
UE

203
NR Node B

212
S-GW

213
P-GW

230
Internet
service

204
Other NR
Node B

5G-CN/EPC
210

FIG.2

FIG. 3

FIG. 4

EP 4 738 749 A1

FIG. 5

FIG. 6

☐ First hop, including a second signal

☐ Second hop, including a first signal

Frequency
domain

Time domain

（1）

☐ Second hop, including a first signal

☐ First hop, including a second signal

Frequency
domain

Time domain

（2）

FIG.7

First hop, including a second signal

Second hop, including a first signal

Frequency
domain

Time domain

(1)

First hop, including a second signal

Second hop, including a first signal

Frequency
domain

Time domain

(2)

FIG.8

| When the first symbol set includes at least one first-type symbol | | The minimum PRB index of the first signal is dependent on a first PUCCH configuration |
| When the first symbol set does not include the first-type symbol | | The minimum PRB index of the first signal is dependent on a second PUCCH configuration |

FIG.9

| Index of a first CCE of a PDCCH for receiving the first signaling | Is used for determining | First PUCCH resource | Is used for | Signal transmission on the first PUCCH |
| PUCCH resource indicator field in the first signaling | Is used for determining | | | |

FIG.10

FIG.11

FIG.12

## INTERNATIONAL SEARCH REPORT

International application No.

**PCT/CN2024/100843**

| A. | CLASSIFICATION OF SUBJECT MATTER |
|---|---|

H04L 5/00(2006.01)i

According to International Patent Classification (IPC) or to both national classification and IPC

| B. | FIELDS SEARCHED |
|---|---|

Minimum documentation searched (classification system followed by classification symbols)

H04L, H04W, G06F

Documentation searched other than minimum documentation to the extent that such documents are included in the fields searched

Electronic data base consulted during the international search (name of data base and, where practicable, search terms used)

CNKI, CNTXT, ENTXTC, ENTXT, VEN, DWPI, 3GPP, IEEE: 资源配置, 资源池, 灵活符号, 符号, 信息元素, 反馈, 最小 PRB, 最小索引, 索引, 指示, 位置, 序号, 开销, 灵活, configuration, symbol, MAC CE, SIB, RRC, DCI, UCI, PUCCH, PDSCH, HARQ, ACK, time domain, information element, feedback, PRB, index, indication, location, number, cost, flexible

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 108023722 A (ZTE CORP.) 11 May 2018 (2018-05-11) entire document | 1-28 |
| A | US 2023096323 A1 (LG ELECTRONICS INC.) 30 March 2023 (2023-03-30) entire document | 1-28 |
| A | WO 2019184484 A1 (TELECOMMUNICATIONS TECHNOLOGY RESEARCH INSTITUTE CO., LTD.) 03 October 2019 (2019-10-03) entire document | 1-28 |
| A | ETRI. "R1-106406, Resource indication and mapping for PUCCH format 3" *3GPP tsg_ran\WG1_RL1*, No. TSGR1_63, 13 November 2010 (2010-11-13), entire document | 1-28 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 September 2024** | **20 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="2">**INTERNATIONAL SEARCH REPORT**<br>**Information on patent family members**</td><td colspan="2">International application No.<br><br>**PCT/CN2024/100843**</td></tr>
</table>

| Patent document cited in search report | | | Publication date (day/month/year) | Patent family member(s) | | | Publication date (day/month/year) |
|---|---|---|---|---|---|---|---|
| CN | 108023722 | A | 11 May 2018 | EP | 3537647 | A1 | 11 September 2019 |
| | | | | EP | 3537647 | A4 | 17 June 2020 |
| | | | | US | 2021345310 | A1 | 04 November 2021 |
| | | | | US | 11864193 | B2 | 02 January 2024 |
| | | | | US | 2024196407 | A1 | 13 June 2024 |
| | | | | WO | 2018082705 | A1 | 11 May 2018 |
| | | | | US | 2019394757 | A1 | 26 December 2019 |
| | | | | US | 11064475 | B2 | 13 July 2021 |
| US | 2023096323 | A1 | 30 March 2023 | None | | | |
| WO | 2019184484 | A1 | 03 October 2019 | None | | | |

Form PCT/ISA/210 (patent family annex) (July 2022)